(19) Europäisches Patentamt
European Patent Office
Office européen des brevets

(11) **EP 3 238 442 B1**

(12) **EUROPEAN PATENT SPECIFICATION**

(45) Date of publication and mention
of the grant of the patent:
**05.05.2021  Bulletin 2021/18**

(21) Application number: **15873620.7**

(22) Date of filing: **22.12.2015**

(51) Int Cl.:
***H04N 7/18*** *(2006.01)*        ***H04N 5/232*** *(2006.01)*

(86) International application number:
**PCT/KR2015/014113**

(87) International publication number:
**WO 2016/105093 (30.06.2016 Gazette 2016/26)**

(54) **METHOD AND APPARATUS FOR OPERATING A SECURITY SYSTEM**

VERFAHREN UND VORRICHTUNG ZUM BETRIEB EINES SICHERHEITSSYSTEMS

PROCÉDÉ ET APPAREIL DE FONCTIONNEMENT D'UN SYSTÈME DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2014  KR 20140190724**

(43) Date of publication of application:
**01.11.2017  Bulletin 2017/44**

(73) Proprietor: **Samsung Electronics Co., Ltd.
Gyeonggi-do 16677 (KR)**

(72) Inventors:
• **KIM, Jun-Hyung**
  **Suwon-si, Gyeonggi-do 16677 (KR)**
• **KANSAL, Apoorv**
  **Suwon-si, Gyeonggi-do 16677 (KR)**

• **CHANG, Youn-Seog**
  **Suwon-si, Gyeonggi-do 16677 (KR)**
• **KIM, Se-Hoon**
  **Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(56) References cited:
EP-A1- 2 549 752        WO-A1-2008/100359
JP-A- 2006 155 450      JP-A- 2007 336 035
KR-A- 20120 124 785     KR-A- 20140 058 192
KR-B1- 101 466 132      US-A1- 2006 066 723
US-A1- 2011 157 431     US-A1- 2012 120 241
US-A1- 2012 147 191

**Description**

[Technical Field]

The present disclosure relates generally to a security system, and more particularly, to a method for and an apparatus for operating the security system.

[Background Art]

The Internet, which is a human centered connectivity network through which humans generate and consume information, is now evolving to the Internet of Things (IoT) in which distributed entities exchange and process information without human intervention. The Internet of Everything (IoE) has also been developed, which is a combination of IoT technology and the Big Data processing technology through a connection with a cloud server. Technology elements, such as, for example, "sensing technology", "wired/wireless communication and network infrastructure", "service interface technology", and "Security technology", have been demanded for IoT implementation. Accordingly, a sensor network, Machine-to-Machine (M2M) communication, and Machine Type Communication (MTC) have been researched.

An IoT environment may provide intelligent Internet technology services, which provide a new value by collecting and analyzing data generated among connected things. IoT may be applied to a variety of fields including, for example, smart home, smart building, smart city, smart car or connected cars, smart grid, health care, smart appliances, and advanced medical services, through the convergence and combination of existing Information Technology (IT) with various industrial applications.

WO 2008/100359 A1 relates to an automated threat detection scheme for a distributed multi-camera surveillance system, wherein each camera is configured to learn the motion flow of objects in its field of view and build a motion flow model. A threat or abnormality is detected based on that a tracked object does not conform to the learned motion flow model, wherein tracking is performed based on an actual moving path of a tracked object.

EP 2 549 752 A1 discloses a wide-area surveillance system, comprising a plurality of surveillance camera terminals covering the wide-area, wherein each pair of adjacent terminals shares a common handover area and wherein a tracked person reaching a handover area is handed over to the adjacent terminal.

US 2006/066723 A1 relates to a mobile tracking system for tracking by a cooperation of multi-camera, each camera including photographing means, position deriving means which derives a position of the self-camera, distance deriving means which derives a distance between the self-autonomic camera and the mobile, and communication means which transmits an identifier of the self-camera, a position of the self-camera, a moving direction of the mobile and a distance between the self-autonomic camera and the mobile to another camera and receives an identifier of the other camera.

Security systems, which generally use one or more security cameras, are configured to monitor a situation in a desired monitoring area. Multiple cameras, which are installed for security or crime prevention in each monitoring area, store recorded videos or output the recorded videos on a real-time basis. The multiple cameras may be installed in a monitoring area, such as, for example, in a building, on a street, at home, etc. Multiple cameras that are installed in a home are connected with a home network system that connects home devices installed in the home through a wired or wireless network, which enables control over the home devices.

In the security system, a camera senses occurrence of an intruder, that is, an object, and tracks and records the object. However, if the object falls beyond or deviates from a visible range of the camera, it may be impossible to track the object. For example, if a subject is occluded by an obstacle, if the subject moves beyond a view of the camera, or if recording becomes difficult to perform due to an increased distance between the subject and the camera, it may be impossible to perform tracking of the subject.

Thus, a technique has been developed in which a camera automatically starts recording, senses motion of the object, and automatically moves with the object, if the object is detected by the camera. Nonetheless, if the object moves beyond a visible range of the camera, the camera may not detect the object.

[Disclosure]

[Technical Problem]

The present disclosure has been made to address at least the above problems and/or disadvantages and to provide at least the advantages described below. Accordingly, an aspect of the present invention provides a camera in a security system and a method of a camera in a security system according to the appended claims.

[Technical Solution]

According to an embodiment of the present disclosure, a camera in a security system is provided. The camera includes a video recording unit configured to record a video and a communication unit. The camera also includes a controller configured to identify a subject from the video, to predict a moving path of the subject, in response to identifying that the subject is predicted to move outside of a view range of the camera to transmit a discovery signal, wherein the discovery signal comprises information for indicating a type of a target camera to be discovered, to receive response signals from a plurality of neighboring cameras in response to the discovery signal, each response signal comprising type information and location information of a respective neighboring camera, to identify at least one target camera corresponding to the moving path among the plurality of neighboring cameras based on the location information of the respective neighboring cameras included in the respective response signals, to identify that the at least one target camera supports Wi-Fi based on the type information of the at least one target camera, to control the communication unit to directly connect to the at least one target camera and to transmit a recording command comprising information about a motion pattern of the subject and location information necessary for continuously recording the moving path of the subject to the at least one target camera.

According to another embodiment of the present disclosure, a method for operating a camera in a security system is provided. A video is recorded. A subject from the video is identified. A moving path of the subject is predicted. In response to identifying that the subject is predicted to move outside of a view range of the camera, a discovery signal is transmitted by a communication unit of the camera, wherein the discovery signal comprises information for indicating a type of target camera to be discovered. Response signals from a plurality of neighboring cameras are received in response to the discovery signal, each response signal comprising type information and location information of a respective neighboring camera. At least one target camera corresponding to the moving path is identified among the plurality of neighboring cameras based on the location information of the respective neighboring cameras included in the respective response signals. It is identified that the at least one target camera supports Wi-Fi based on the type information of the at least one target camera. The camera is directly connected, via the communication unit, to the at least one target camera. A recording command including information about a motion pattern of the subject and location information necessary for continuously recording the moving path of the subject is transmitted to the at least one target camera.

[Description of Drawings]

The above and other aspects, features, and advantages of the present disclosure will be more apparent from the following detailed description when taken in conjunction with the accompanying drawings, in which:

FIG. 1 is a diagram illustrating a structure of a monitoring system, according to an embodiment of the present disclosure;
FIGS. 2a and 2b are diagrams illustrating a moving scenario of a subject, according to an embodiment of the present disclosure;
FIG. 3 is a flowchart illustrating an operating process of a camera, according to an embodiment of the present disclosure;
FIG. 4 is a block diagram illustrating a camera capable of tracking a subject, according to an embodiment of the present disclosure;
FIG. 5 is a message flow diagram illustrating an interworking procedure between multiple cameras, according to an embodiment of the present disclosure;
FIGS. 6a and 6b are diagrams illustrating a process in which multiple cameras track an object, according to an embodiment of the present disclosure;
FIG. 7 is a diagram illustrating tracking of a moving path using a sensor, according to an embodiment of the present disclosure;
FIG. 8 is a diagram illustrating a broadcasting discovery procedure, according to an embodiment of the present disclosure;
FIGS. 9a and 9b are diagrams illustrating a zone-based broadcasting discovery procedure, according to an embodiment of the present disclosure;
FIGS. 10a and 10b are diagrams illustrating a directional antenna-based discovery procedure, according to an embodiment of the present disclosure;
FIG. 11 is a flowchart illustrating a process of discovering a target camera, according to an embodiment of the present disclosure;
FIG. 12 is a flowchart illustrating a process of starting recording at the request of a neighbor camera, according to an embodiment of the present disclosure;

FIG. 13 is a diagram illustrating a procedure for selecting and controlling a target camera, according to an embodiment of the present disclosure;

FIG. 14 is a diagram illustrating a procedure for selecting and controlling a target camera based on broadcasting, according to an embodiment of the present disclosure;

FIG. 15 is a diagram illustrating a structure of a monitoring system including multiple sensors, according to an embodiment of the present disclosure;

FIGS. 16a and 16b are diagrams illustrating multiple sensors and multiple cameras are installed, according to an embodiment of the present disclosure;

FIG. 17 is a diagram illustrating a tracking and monitoring scenario based on interworking with multiple sensors, according to an embodiment of the present disclosure;

FIGS. 18a and 18b are diagram illustrating multiple sensors and multiple cameras, according to another embodiment of the present disclosure;

FIG. 19 is a diagram illustrating a tracking and monitoring scenario based on interworking with multiple sensors, according to an embodiment of the present disclosure;

FIG. 20 is a diagram illustrating a tracking and monitoring scenario based on interworking with multiple sensors, according to another embodiment of the present disclosure;

FIGS. 21a through 21e are diagram illustrating a tracking and monitoring scenario based on interworking with multiple sensors, according to another embodiment of the present disclosure;

FIG. 22 is a flowchart illustrating a process of sensing a situation based on multiple sensors, according to an embodiment of the present disclosure; and

FIGS. 23a through 23d are diagrams illustrating a situation sensed using multiple sensors, according to an embodiment of the present disclosure.

[Mode for Invention]

Embodiments of the present disclosure are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present disclosure.

It is to be noted that some components shown in the drawings are exaggerated, omitted, or schematically illustrated, and the drawn size of each component does not exactly reflect its real size.

It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a non-transitory computer-readable memory that can direct a computer or other programmable data processing apparatus to function in a particular manner, such that the instructions stored in the non-transitory computer-readable memory produce an article of manufacture including instruction means which implement the function/act specified in the flowchart and/or block diagram block or blocks. The computer program instructions may also be loaded onto a computer or other programmable data processing apparatus to cause a series of operations to be performed on the computer or other programmable apparatus to produce a computer implemented process such that the instructions which execute on the computer or other programmable apparatus provide operations for implementing the functions/acts specified in the flowchart and/or block diagram block or blocks.

Furthermore, the respective block diagrams may illustrate parts of modules, segments, or codes including one or more executable instructions for performing specific logic function(s). Moreover, it should be noted that the functions of the blocks may be performed in a different order in several modifications. For example, two successive blocks may be performed substantially at the same time, or may be performed in reverse order according to their functions.

The term "unit", as used herein, means, but is not limited to, a software or hardware component, such as a Field Programmable Gate Array (FPGA) or Application Specific Integrated Circuit (ASIC), which performs certain tasks. A unit may advantageously be configured to reside on a non-transitory addressable storage medium and configured to be executed on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and units may be combined into fewer components and units or further separated into additional components and units. In addition, the components and units may be implemented such that they execute one or more Central Processing Units (CPUs) in a device or a secure multimedia card.

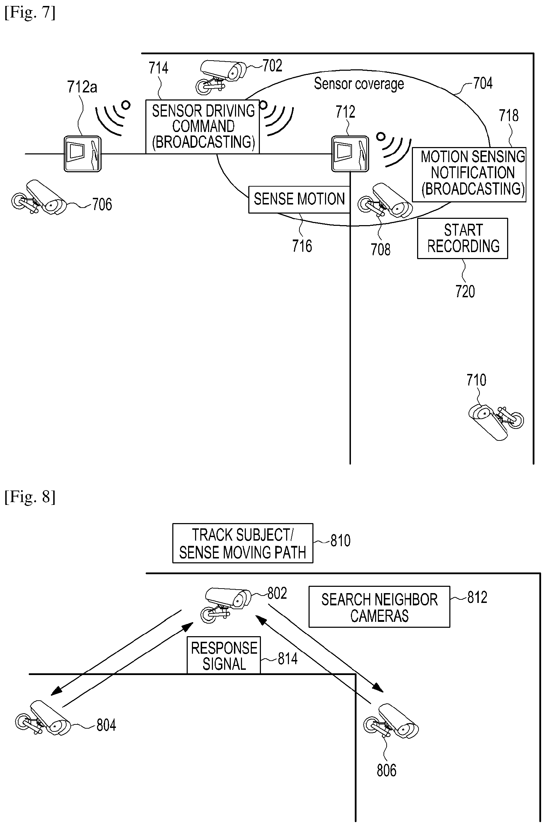

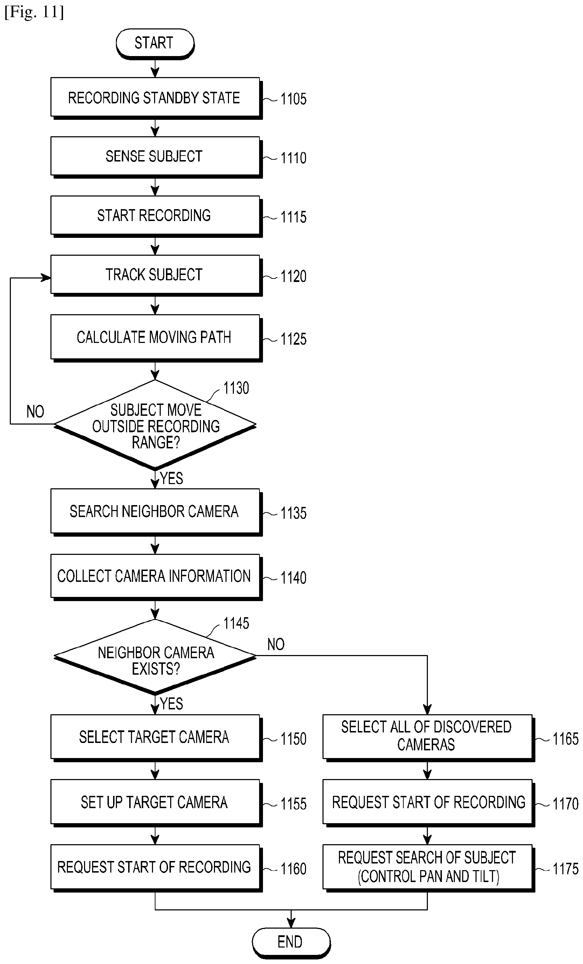

The present invention as claimed corresponds to a combination of the embodiments of figures 8 and 11. The other disclosed embodiments are to be regarded as examples not falling under the scope of the present invention.

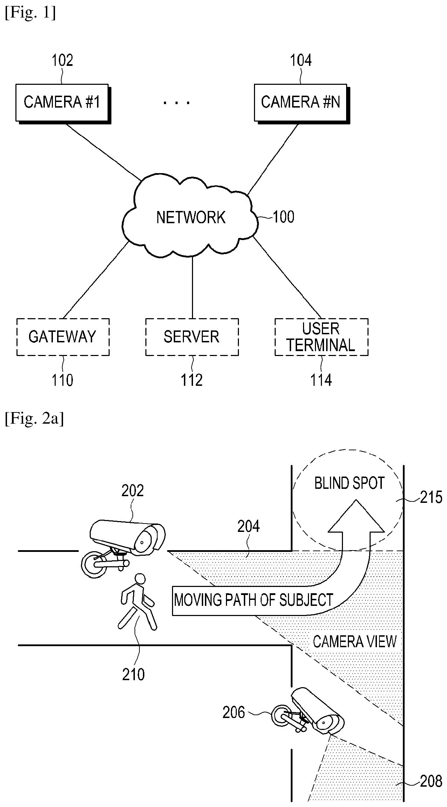

FIG. 1 is a diagram illustrating a schematic structure of a monitoring system, according to an embodiment of the present disclosure.

Referring to FIG. 1, a monitoring system includes a plurality of cameras (camera #1 102 through camera #N 104) configured to record an object while tracking movement of the object. The cameras 102 and 104 are configured to communicate with each other through a network 100 based on a wired and/or wireless technique. According to an embodiment of the present disclosure, the monitoring system may further include at least one of a gateway 110, a sever 112, and a user terminal 114 that are connectable to the cameras 102 and 104 through the network 100. The gateway 110 controls a connection between the cameras 102 and 104 and a connection to other security devices, and controls an interworking between the cameras 102 and 104 the other security devices. The server 112 receives, converts, and stores videos recorded by the cameras 102 and 104, and provides the videos in response to a user's request. The user terminal 114 connects to at least one of the cameras 102 and 104, the gateway 110, and the server 112 through the network 100, sends a recording command, or collects desired information.

The cameras 102 and 104 are installed at designated locations in a monitoring area, and may be configured to perform recording at all times or may be configured to perform recording upon sensing motion. Accordingly, at least some of the cameras 102 and 104 may interwork with an adjacent motion sensor or may include a motion sensor.

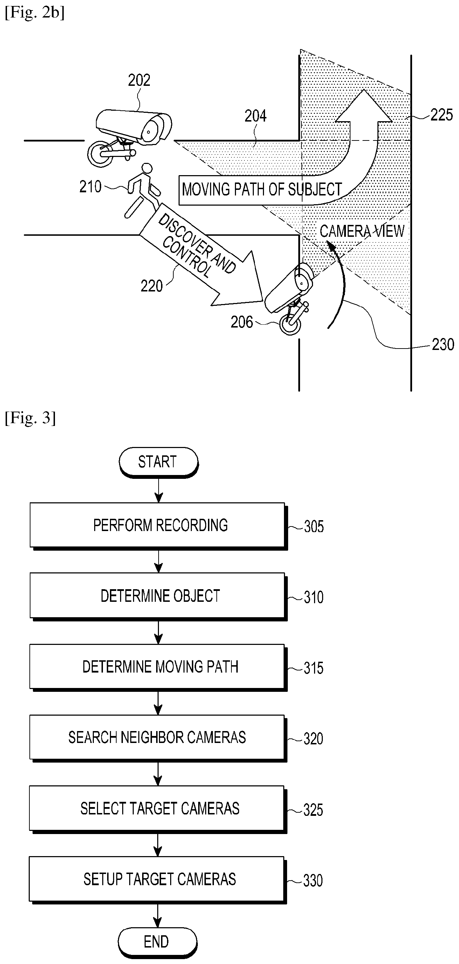

FIGS. 2a and 2b are diagrams illustrating a scenario in which a subject moves, according to an embodiment of the present disclosure.

Referring to FIG. 2a, a first camera 202 and a second camera 206 are installed in their respective locations and are configured to rotate up/down, to the left/to the right, and up/down/to the left/to the right. The first camera 202 senses motion of a subject 210 and begins recording. The first camera 202 continues recording while moving along with the subject 210. The subject 210 may continuously move, finally leaving a view 204 of the first camera 202. At this time, if the second camera 206, because of sensing periodic motion or another object, is oriented in a direction other than a direction in which the subject 210 moves, the subject 210 may not fall within a view 208 of the second camera 206. As such, a blind spot 215 results in which the first camera 202 and the second camera 206 do not record the subject 210. Thus, the first camera 202 and the second camera 206 miss the motion of the subject 210, resulting in a serious security problem.

Referring to FIG. 2b, upon sensing motion of the subject 210, the first camera 202 discovers the second camera 206, which is neighboring the first camera 202, and sends a recording command 220 to the second camera 206. The recording command 220 may include information about the subject 210 and a predicted or estimated location at which the second camera 206 may record the subject 210. The second camera 206 rotates toward the subject 210, as indicated by 230, in response to the recording command 220, such that the subject 210 falls within a view 225 of the second camera 206.

A technique for discovering a camera in a moving path or route of a subject among multiple cameras, a technique for selecting and connecting to a camera that is suitable for recording the subject, and a technique for sending a recording command to the selected camera are described in greater detail below.

FIG. 3 is a flowchart illustrating an operating process of a camera, according to an embodiment of the present disclosure.

Referring to FIG. 3, in step 305, the camera begins recording an object video. The camera may perform recording at all times or may initiate recording upon sensing of a moving object within a visible range of the camera. The camera may periodically rotate within a predetermined range (e.g., about 0° - about 180°) or may move with the motion of the sensed object. In step 310, the camera analyzes the object video to recognize an object sensed in the object video as a subject, and recognizes the subject. Recognizing the subject may include identifying the subject and patterning information of the subject. Identifying the subject may include identifying whether the subject is human and whether the subject is a resident. Patterning the information of the subject may include identifying whether motion of the subject has a regular pattern like a vehicle or a passerby, or an irregular pattern like a pet.

In step 315, the camera determines a moving path of the subject. More specifically, the camera calculates a location of the subject while tracking movement of the subject. The location of the subject may be a relative location with respect to the camera. For example, the camera predicts a future location of the subject based on movement of the subject.

In step 320, the camera searches for at least one neighboring camera. That is, the camera may discover at least one camera that is adjacent to the subject based on the calculated location of the subject. The search and discovery may be performed based on at least one of absolute locations of neighboring cameras, zones where the neighboring cameras are located, and relative locations of the neighboring cameras with respect to the camera. For example, the relative locations of the neighboring cameras may be measured using triangulation based on a directional signal and a signal strength.

In step 325, the camera selects at least one target camera capable of recording the subject based on the discovery result. Additionally, the camera may consider capabilities of each neighboring camera, such as, for example, resolution, frame rate, brightness, Pan/Tilt/Zoom movements (PTZ) function, and so forth, when selecting the target cameras.

In step 330, the camera sends a recording command for setting up the selected target camera to the selected target camera. The recording command may include at least one of information for identifying the subject, information regarding a motion pattern of the subject, location information necessary for continuously recording a moving path of the subject, a recording resolution, and a frame rate.

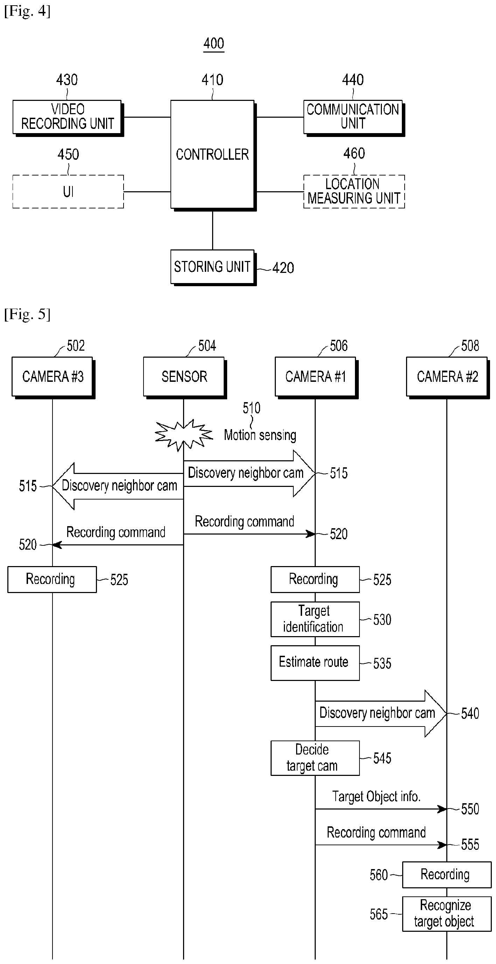

FIG. 4 is a block diagram illustrating a camera capable of tracking a subject, according to an embodiment of the present disclosure.

Referring to FIG. 4, a camera 400 includes a controller 410, a storing unit 420, a video recording unit 430, and a communication unit 440, and may further include a User Interface (UI) 450 and/or a location measuring unit 460.

The video recording unit 430 may include a camera driving unit and a camera module, and may perform a general camera function, such as, for example, capturing a still image and recording a video of the subject. The video recording unit 430 may also detect motion of the subject and report the detection to the controller 410, and move along with the subject under control of the controller 410. Accordingly, the video recording unit 430 may include a motion sensor.

The storing unit 420 stores a program code, data, and/or information necessary for operations of the controller 410. The storing unit 420 also receives a recorded video generated by the video recording unit 430 through the controller 410, and stores the received recorded video therein when necessary. The controller 410 stores recorded videos generated during a predetermined period in the storing unit 420. The storing unit 420 may further store additional information necessary for control over the camera 400, e.g., at least one of absolute/relative location information, capability information, and recording commands of the camera 400 and other cameras.

The communication unit 440 may interwork with another camera or another neighboring communication device using a short-range wireless communication means or a wired cable. According to an embodiment of the present disclosure, the communication unit 440 may be connected with another device through a wireless technique such as, for example, Bluetooth, Bluetooth Low Energy (BLE), ZigBee, infrared communication, Wireless Fidelity (Wi-Fi), Wi-Fi Direct, home Radio Frequency (RF), Digital Living Network Alliance (DLNA), or the like. The communication unit 440 may also be connected with another device through a wired technique such as, for example, a High-Definition Multimedia Interface (HDMI) cable, a Universal Serial Bus (USB) cable, a micro/mini USB cable, an Audio-Video (AV) cable, or the like. The communication unit 440 discovers neighboring cameras under the control of the controller 410 to provide locations and/or capability information of the neighboring cameras to the controller 410, and sends a recording command delivered from the controller 410 to a corresponding camera.

The UI 450 may include output modules such as, for example, a display, a speaker, an alarm lamp, and so forth, and input modules such as, for example, a touchscreen, a keypad, and so forth. The UI 450 may be used by a user in directly controlling the camera 400.

The location measuring unit 460 measures absolute information or relative information regarding a location in which the camera 400 is installed, and provides the measured absolute information or relative information to the controller 410. The location measuring unit 460 may be embodied as, for example, a Global Positioning System (GPS) module. The absolute information may be, for example, a latitude and a longitude measured by the GPS module. The relative information may be, for example, a relative location with respect to a predetermined reference (e.g., a gateway, a server, a control console, or the like).

The controller 410 may be embodied as a processor and may include a Central Processing Unit (CPU), a Read-Only Memory (ROM) storing a control program for control over the camera 400, and a Random Access Memory (RAM) used as a memory region for tasks performed in the camera 400. The controller 410 controls the video recording unit 430 by executing programs stored in the ROM or the RAM, or by executing application programs that may be stored in the storing unit 420. The controller communicates with neighboring cameras through the communication unit 440, and generates a recording command and sends the recording command to the neighboring cameras, or stores information collected from the neighboring cameras in the storing unit 420.

More specifically, the controller 410 collects location information that is measured by the location measuring unit 460, location information that is input by a user, or location information that is set at the time of manufacturing. The controller 410 identifies a subject based on a recorded video delivered from the video recording unit 430, and detects motion. In another embodiment of the present disclosure, the controller 410 receives a sensing result obtained by an adjacent motion sensor through the communication unit 440, and detects motion of the subject. The controller 410 also discovers neighboring cameras through the communication unit 440 in order to select a target camera to which a recording command is to be sent. The controller generates the recording command, and sends the generated recording command to the selected target camera through the communication unit 440.

FIG. 5 is a message flow diagram illustrating an interworking procedure between multiple cameras, according to an embodiment of the present disclosure. A sensor 504 and three cameras 502, 506 and 508 are installed in the security system.

Referring to FIG. 5, the sensor 504 senses motion, in step 510, and sends a discovery signal to the first camera 506 and the third camera 502, in step 515. The discovery signal may be broadcast to unspecified users or unicast or multicast to one or more receivers. For example, the first camera 506 and the third camera 502 may be in locations where the first camera 506 and the third camera 502 may receive the discovery signal sent from the sensor 504 and respond to the discovery signal. In another example, the sensor 504 stores information about the first camera 506 and the third camera 502 in advance, designates the first camera 506 and the third camera 502, and sends the discovery signal to the designated first and third cameras 506 and 502.

In step 520, the sensor 504 sends a recording command to the first camera 506 and the third camera 502, which respond to the discovery signal. In step 525, the first camera 506 and the third camera 502 begin recording in response to the recording command. The first camera 506 and the third camera 502 may begin recording after moving their view toward the sensor 504. The location of the sensor 504 may be known to the first camera 506 and the third camera 502, or may be delivered together with the recording command.

The first camera 506 identifies a subject as a target object to be tracked and recorded, in step 530, and tracks a moving path of the subject in operation 535. For example, the first camera 506 may identify whether the subject is a human and whether the subject is a resident or a non-resident in order to determine whether to track the moving path of the subject.

In step 540, the first camera 506 sends a discovery signal to the second camera 508, neighboring the first camera 506, and located on or near the moving path of the subject. In an embodiment of the present disclosure, the first camera 506 may send the discovery signal through a directional signal directed along the moving path. In another embodiment, the first camera 506 may select the second neighbor camera 508 near the moving path based on previously stored location information or zone information of the neighboring cameras, designate the second camera 508, and send the discovery signal to the designated second camera 508. The second camera 508 sends a response to the discovery signal to the first camera 506.

The first camera 506 selects the second camera 508, which responds to the discovery signal, as a target camera, in step 545, delivers target object information to the second camera 508, in step 550, and sends the recording command to the second camera 508, in step 555. In another embodiment of the present disclosure, the recording command may be sent including target object information related to an identification and/or motion of the subject. The first camera 506 may continuously perform recording for a predetermined time after sending the recording command, or may continuously perform recording while detection of motion of the subject.

In step 560, the second camera 508 begins recording in response to the recording command. The second camera 508 may begin recording in a direction toward the location or moving path of the subject. Information about the location or moving path of the subject may be delivered together with the target object information or the recording command. In step 565, the second camera 508 identifies the subject as the target object to be tracked and recorded, and thereafter, similar operations are repeated.

As such, embodiments of the present disclosure may continuously track the subject through interworking between a sensor and/or cameras, without intervention of a CPU or a user, and may directly identify and track and record an unspecified intruder. Moreover, when necessary, multiple cameras may record the subject from various angles.

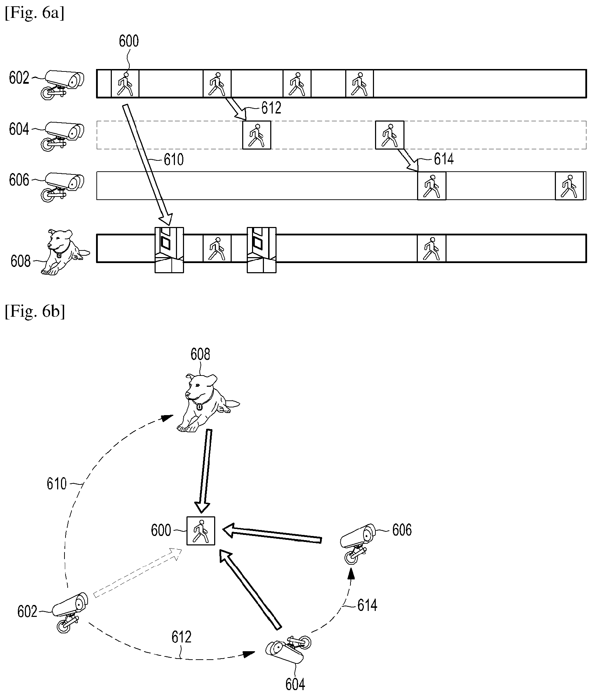

FIGS. 6a and 6b are timing diagrams illustrating object tracking by multiple cameras, according to an embodiment of the present disclosure.

Referring to FIG. 6a, a first camera 602 detects a subject 600, and sends a recording command 610 to a fourth camera 608. The fourth camera 608 records a video in response to the recording command 610. Thereafter, the first camera 602 records the video along with the movement of the subject 600, and upon sensing movement of the subject 600 toward a place near a second camera 604, sends a recording command 612 to the second camera 604 to allow the second camera 604 to being recording. Similarly, the second camera 604 senses movement of the subject 600 to a place near a third camera 606 and sends a recording command 614 to the third camera 606. The third camera 606 records a video of the subject 600 in response to the recording command 614.

Referring to FIG. 6b, the subject 600 may be continuously tracked by at least one cameras through interworking among the first through fourth cameras 602, 604, 606, and 608. Here, the fourth camera 608 is implemented as a moving camera embedded on a necklace of a pet dog.

Techniques for tracking a moving path of a subject using cameras is described in greater detail below.

FIG. 7 is a diagram illustrating tracking of a moving path using a sensor, according to an embodiment of the present disclosure.

Referring to FIG. 7, a first camera 702, a second camera 706, a third camera 708, and a fourth camera 710 are installed in their respective locations, having predetermined distance intervals therebetween. The first camera 702 broadcasts a sensor driving command 714 at predetermined time intervals or upon sensing motion of a subject. Sensors 712 and 712a near the first camera 702 begin a sensing operation in response to receiving the sensor driving command 714. The sensors 712 and 712a terminate the sensing operation after a predetermined time if no motion sensed and a new sensor driving command is not received. Upon sensing motion 716 in a sensor coverage area 704, the sensor 712 broadcasts a motion sensing notification 718. Cameras near the sensor 712, i.e., a third camera 708, begin recording 720 in response to the motion sensing notification 718. The third camera 708 terminates a recording operation if motion not sensed and a new motion sensing notification is not sensed within a predetermined time after beginning recording.

FIG. 8 is a diagram illustrating a broadcasting discovery procedure, according to the invention.

Referring to FIG. 8, a first camera 802, a second camera 804, and a third camera 806 are installed in their respective locations at predetermined distance intervals. At predetermined time intervals or upon sensing motion of a subject, the first camera 802 tracks and records a subject and calculates a moving path of the subject in 810. When the subject is predicted to deviate from a visible range of the first camera 802, the first camera 802 broadcasts a discovery signal 812 to search neighboring cameras. The discovery signal 812 is sent using Wi-Fi, and is configured, as set forth below, using a Simple Service Discovery Protocol (SSDP).

M-SEARCH * HTTP/1.1
ST: urn:SmartHomeAlliance-org:device:Wi-Fi_Camera
MX: 5
MAN: "ssdp:discover"
HOST: 239.255.255.250:1900

In this example, the discovery signal 812 includes information Wi-Fi_Camera indicating that a target device to be discovered is a Wi-Fi camera and information identifying the first camera 802, e.g., an Internet protocol (IP) address and a port number.

The second camera 804 and the third camera 806 receive the discovery signal 812 and send respective response signals 814. The response signals 814 are configured as set forth below.

HTTP/1.1 200 OK
ST: urn:SmartHomeAlliance-org:device:Wi-Fi_Camera
SERVER: Linux 1.01 SHP/2.0 CameraMaster/1.0
Positioning Type = absolute location


Position = latitude / longitude


The response signal 814 includes information Wi-Fi_Camera, indicating that a device sending the response signal 814 is a Wi-Fi camera, and location information. The location information may include a latitude and a longitude, for example, for an absolute location.

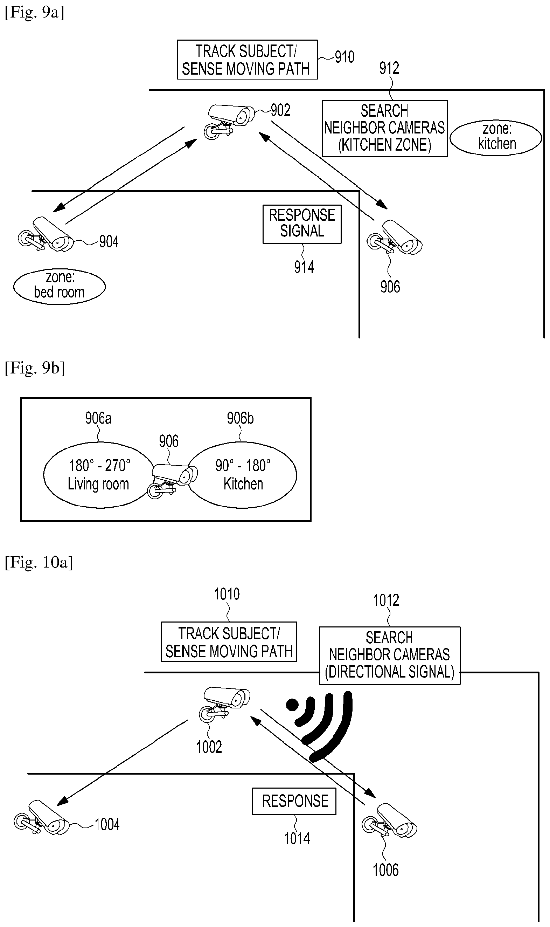

FIGS. 9a and 9b are diagrams illustrating a zone-based broadcasting discovery procedure, according to an embodiment of the present disclosure.

Referring to FIG. 9a, a first camera 902, a second camera 904, and a third camera 906 are installed in their respective locations at predetermined distance intervals, and store location information. Referring to FIG. 9b, the third camera 906 may be configured to cover at least one zone, and as illustrated, the third camera 906 records a living room zone 906a in a direction of about 180° to about 270° and records a kitchen zone 906b in a direction of about 90° to about 180°.

At predetermined time intervals or upon sensing motion of a subject, the first camera 902 tracks and records the subject and calculates a moving path of the subject in 910. When the subject is predicted to deviate from a visible range of the first camera 902, the first camera 902 broadcasts a discovery signal 912 seeking neighboring cameras and discovering at least one neighboring camera. As a result of predicting the motion of the subject, the first camera 902 determines that the subject enters a particular zone, e.g., a kitchen zone, and generates the discovery signal 912 for discovering a camera in the kitchen zone. For example, the discovery signal 912 may be configured as set below.

M-SEARCH * HTTP/1.1

ST: urn:SmartHomeAlliance-org:device:Wi-Fi_Camera_kitchen
MX: 5
MAN: "ssdp:discover"
HOST: 239.255.255.250:1900

The discovery signal 912 may include information Wi-Fi-Camera_kitchen, indicating that a target device to be discovered is a Wi-Fi camera located in the kitchen zone, and an IP address and a port number for identifying the first camera 902.

The second camera 904 and the third camera 906 receive the discovery signal 912 and the third camera 906 sends respective a response signal 914 to the first camera 902. The response signals 914 may be configured as set forth below.

```
HTTP/1.1 200 OK
ST: urn:SmartHomeAlliance-org:device:Wi-Fi_Camera_kitchen
SERVER: Linux 1.01 SHP/2.0 CameraMaster/1.0
Positioning Type = relational location
Position = camera1/90degree/5m
```

The response signal 914 includes information Wi-Fi_Camera_kitchen, indicating that a device sending the response signal 914 is a Wi-Fi camera located in the kitchen zone, and location information. The location information may include a reference device camera1, a direction 90degree, and a distance 5m, for example, for a relative location.

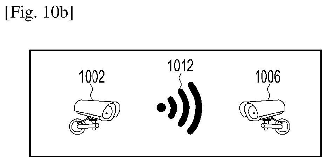

FIGS. 10a and 10b are diagrams illustrating a directional antenna-based discovery procedure, according to an embodiment of the present disclosure.

Referring to FIG. 10a, a first camera 1002, a second camera 1004, and a third camera 1006 are installed in their respective locations at predetermined distance intervals, and store location information about them and their neighboring cameras. Referring to FIG. 10B, one or more of the first camera 1002, the second camera 1004, and the third camera 1006, for example, at least the first camera 1002, are configured to output a directional signal. In this embodiment, the first camera 1002 forms a directional signal 1012 toward the third camera 1006.

At predetermined time intervals or upon sensing motion of a subject, the first camera 1002 tracks and records the subject and calculates a moving path of the subject in 1010. When the subject is predicted to deviate from a visible range of the first camera 1002, the first camera 1002 outputs a discovery signal 1012 seeking neighboring cameras and discovering at least one camera neighboring the first camera 1002 through a directional signal. That is, as a result of predicting motion of the subject, the first camera 1002 determines that the subject enters a visible range of the third camera 1006, and forms a directional signal toward the third camera 1006. For example, the discovery signal 1012 may be configured as set forth below.

```
M-SEARCH * HTTP/1.1
ST: urn:SmartHomeAlliance-org:device:Wi-Fi_Camera
MX: 5
MAN: "ssdp:discover"
HOST: 239.255.255.250:1900
```

The discovery signal 1012 may include information Wi-Fi-Camera, indicating that a target device to be discovered is a Wi-Fi camera, and an IP address and a port number for identifying the first camera 1002.

The third camera 1006 receives the discovery signal 1012 and sends a response signal 1014. The response signal 1014 may be configured as set forth below.

```
HTTP/1.1 200 OK
ST: urn:SmartHomeAlliance-org:device:Wi-Fi_Camera
SERVER: Linux 1.01 SHP/2.0 CameraMaster/1.0
Positioning Type = relational position
Position = camera1/90degree/5m
```

The response signal 1014 includes information Wi-Fi-Camera, indicating that a device sending the response signal 1014 is a Wi-Fi camera, and location information. The location information may include a reference device camera1, a direction 90degree, and a distance 5m, for example, for a relative location.

Another example of the response signals 814, 914, and 1014 may be configured as set forth below.

```
HTTP/1.1 200 OK
ST: urn:SmartHomeAlliance-org:device:Wi-Fi_Camera(_zone)
EXT:
USN:uuid:abc41940-1a01-4090-8677-abcdef123456
::urn:SmartHomeAlliance-org:device:Wi-Fi_Camera:1
CACHE-CONTROL: max-age = 1800
LOCATION: http://168.219.208.38:8888/Location
SERVER: Linux 1.01 SHP/2.0 CameraMaster/1.0
```

Location information about a responding camera may be expressed with an IP address and a port number.

Another example of the response signals 814, 914, and 1014 may be configured, as set forth below.

```
HTTP/1.1 200 OK
ST: urn:SmartHomeAlliance-org:device:Wi-Fi_Camera(_zone)
EXT:
USN:uuid:abc41940-1a01-4090-8677-abcdef123456
::urn:SmartHomeAlliance-org:device:Wi-Fi_Camera:1
CACHE-CONTROL: max-age = 1800
LOCATION:
SERVER: Linux 1.01 SHP/2.0 CameraMaster/1.0
```

Positioning Type = xxx

Position = yyy

Location information about a responding camera may be expressed with a type (an absolute location, a relative location, or a zone) of the location information and a value indicating a location.

In FIGS. 8 through 10b, the location information included in the response signals 814, 914, and 1014 may be expressed as absolute locations, relative locations, or installation locations. For an absolute location, the location information may include a latitude and a longitude. An absolute location of a target camera may be measured by a camera or a separate location measuring server using triangulation or may be measured using a GPS. For a relative location, the location information may include a distance, a direction, and related device information. A relative location of a target camera may be measured using a Wi-Fi scan of a reference camera or a scan using a directional antenna. For an installation location, the location information may identify a zone (e.g., a kitchen or a living room). An installation location of a target camera may be directly input by a user when the target camera is installed, or may be input to the target camera through a user terminal or a server.

FIG. 11 is a flowchart illustrating a process of discovering a target camera, according to the invention. The illustrated process is performed by a camera that has sensed a subject.

Referring to FIG. 11, in step 1105, a camera is in a recording standby state or a typical monitoring state. The camera senses the subject, or receives a result of sensing the subject from a neighboring sensor, in step 1110. The camera begins recording, in step 1115. In step 1120, the camera continues recording while tracking movement of the subject. The camera calculates a moving path of the subject, in step 1125. The camera determines whether the subject is predicted to move outside a recording range of the camera, in step 1130. If the subject is not predicted to move outside the recording range of the camera, the camera returns to step 1120 and continues recording the subject and calculating the moving path of the subject. If the subject is predicted to move outside the recording range of the camera, the camera searches for and discovers at least one neighboring camera located near the camera, in step 1135. The discovery is performed based on broadcasting, as described in the parts above corresponding to FIG. 8.

The camera collects information about the discovered at least one neighboring camera, in step 1140. The camera determines whether there is a neighboring camera capable of recording the subject, in step 1145. The determination may be performed based on the calculated moving path and location and/or capability information regarding each neighboring camera. If there is a neighboring camera that is capable of recording the subject, the camera selects at least one target camera to which a recording command is to be sent, in step 1150. When selecting the target camera, the camera may select a neighboring camera located near the moving path of the subject, based on location information included in a response signal received from neighboring cameras. In another embodiment of the present disclosure, the camera may discover a neighboring camera located in front of the moving path of the subject by using a directional antenna. In another embodiment of the present disclosure, the camera may select a neighboring camera based on previously stored location information about neighboring cameras.

In step 1155, the camera generates a recording command for setting up the target camera. The recording command may include at least one of information about a motion pattern of the subject, location information necessary for continuously recording the moving path of the subject, a recording resolution, and a frame rate. In step 1160, the camera sends the recording command to the target camera to request the target camera to start recording.

If a neighboring camera capable of recording the subject does not exist, the camera selects all the cameras discovered in step 1135 as target cameras, in step 1165, and sends the recording command to the target cameras to request the target cameras to start recording, in step 1170. In step 1175, the camera requests the target cameras to search the subject by controlling pan, tilt, or the like. In another embodiment of the present disclosure, the camera may request recording of the subject through the recording command.

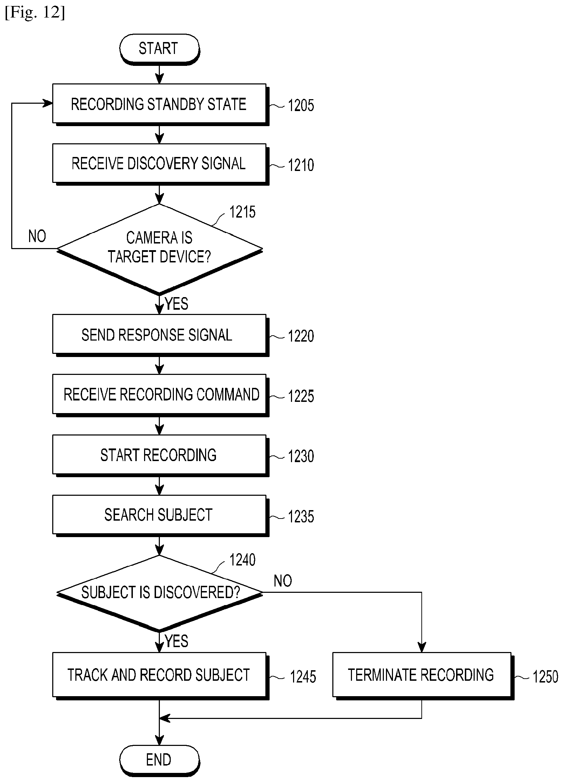

FIG. 12 is a flowchart illustrating a process of starting recording at the request of a neighboring camera, according to an embodiment of the present disclosure.

Referring to FIG. 12, in step 1205, a camera is in a recording standby state or a typical monitoring state. The camera receives a discovery signal from a neighboring camera, in step 1210. The camera determines whether the camera is a target camera, in step 1215. In an embodiment of the present disclosure, the camera may recognize conditions of the target camera, e.g., a zone, a capability, and so forth, from the discovery signal, and may determine that the camera is the target camera, if the conditions are satisfied. In another embodiment of the present disclosure, if the discovery signal does not specify conditions of the target camera, the camera may skip step 1215. If the camera is not the target camera, the camera returns to step 1205.

If the camera is the target camera, the camera sends a response signal to the neighboring camera in response to the discovery signal, in step 1220. The response signal may include at least one of location information and capability information regarding the camera. The camera receives a recording command instructing it to start recording, from the neighboring camera, in step 1225, and starts recording in a direction indicated by the recording command, in step 1230. For example, the recording command may include target object information related to an identification and/or a motion of the subject.

The camera searches for the subject through recording, in step 1235, and determines whether the subject is discovered, in step 1240. If the recording command indicates an identification of the subject, the camera may determine whether the subject indicated by the recording command is included in a recorded video, in step 1240. If the indicated subject or an arbitrary subject is discovered, the camera continues recording while tracking the subject, in step 1245. If the indicated subject or an arbitrary subject is not discovered, the camera terminates recording immediately or after a predetermined time, in step 1250.

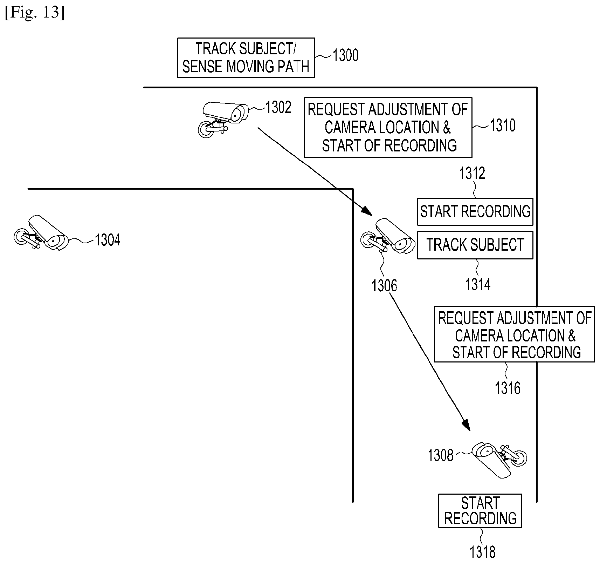

FIG. 13 is a diagram illustrating a procedure for selecting and controlling a target camera, according to an embodiment of the present disclosure. Operations are shown for a case where a target camera capable of recording a subject may be determined.

Referring to FIG. 13, a first camera 1302, a second camera 1304, a third camera 1306, and a fourth camera 1308 are installed in their respective locations at predetermined distance intervals. At predetermined time intervals or upon sensing motion of the subject, the first camera 1302 rotates toward the subject, tracks and records the subject, and calculates a moving path of the subject, in step 1300. If locations of the neighbor cameras 1304 and 1306 are known to the first camera 1302, the first camera 1302 determines that the third camera 1306 is located near the moving path of the subject. Thus, the first camera 1302 sends a recording command to the third camera 1306, in step 1310. The recording command requests the third camera to adjust a viewing direction and to start recording. The third camera 1306 begins recording in response to the recording command, in step 1312, and tracks the subject, in step 1314. The third camera 1306 also stores information about the locations of the neighboring cameras 1302 and 1308, in advance. If movement of the subject is sensed in a direction toward the fourth camera 1308, the third camera 1306 sends the recording command to the fourth camera 1308, in step 1316. The recording command requests the fourth camera 1308 to adjust a viewing direction and to start recording. The fourth camera 1308 starts recording in response to the recording command, in step 1318.

An example of the recording command may be configured as set forth below.

```
PUT /devices/0/camera HTTP/1.1
   Host: {IPv4Address}
  X-API-Version: v.1.0.0
  Content-Type: application/json
  Content-Length: {contentLength]
  { "Camera": {
  "tilt": 30,
   "pan": 90
   }
  }
```

The recording command may include adjustment values for tilt and pan with which a target camera is to initiate recording.

Another example of the recording command may be configured as set forth below.

```
POST /devices/0/camera/captures HTTP/1.1
   Host: {IPv4Address}
  X-API-Version: v.1.0.0
  Content-Type: application/json
  Content-Length: {contentLength]
  {"Capture": {
  "mediaType": "Video",
   "start": true
  } }
```

The recording command may include information instructing the target camera to initiate recording of an object video.

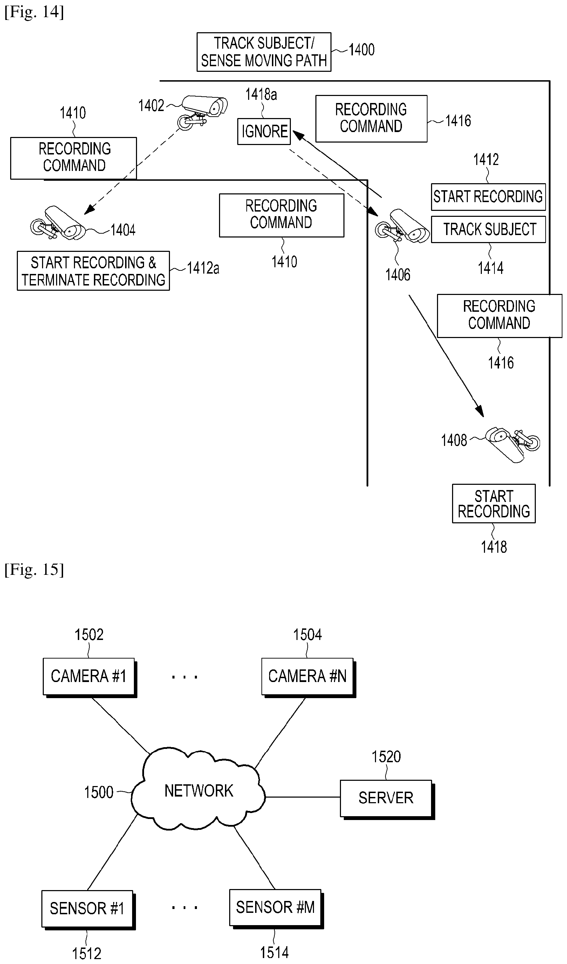

FIG. 14 is a diagram illustrating a procedure for selecting and controlling a target camera based on broadcasting, according to an embodiment of the present disclosure. Operations are shown for a case where a target camera capable of recording a subject may not be determined.

Referring to FIG. 14, a first camera 1402, a second camera 1404, a third camera 1406, and a fourth camera 1408 are installed in their respective locations at predetermined distance intervals. At predetermined time intervals or upon sensing motion of the subject, the first camera 1402 rotates toward the subject, tracks and records the subject, and calculates a moving path of the subject, in step 1400. If the subject is predicted to leave a visible range of the first camera 1402, the first camera 1402 begins a procedure for selecting a target camera. The first camera 1402 may not

11

know locations of neighboring cameras 1404, 1406, and 1408. Thus, the first camera 1402 broadcasts a recording command including information about the subject, in step 1410. The recording command arrives at the second camera 1404 and the third camera 1406 located near the first camera 1402. The second camera 1404 and the third camera 1406 begin recording in response to the recording command, in steps 1412 and 1412a, respectively. The second camera 1404 fails to detect the subject during recording, and then terminates its recording, in step 1412a.

The third camera 1406 detects the subject and continues tracking the subject, in step 1414. If the subject is predicted to leave a visible range of the third camera 1406, the third camera 1406 broadcasts a recording command including information about the subject, in step 1416. The recording command is received at the first camera 1402 and the fourth camera 1408 located near the third camera 1406. The fourth camera 1408 begins recording in response to the recording command, in step 1418. The first camera 1402 ignores the recording command, in step 1418a, because it is already continuing to record the subject. The fourth camera 1408 detects the subject and continues tracking the subject.

An example of the recording command may be configured as set forth below.

```
PUT /devices/0/camera HTTP/1.1
{
  "Camera": {
  "tilt": {minTilt},
  } "pan": {minPan}
```

The recording command may include minimum values for tilt and pan for an arbitrary camera.

Another example of the recording command may be configured as set forth below.

```
PUT /devices/0/camera HTTP/1.1
    {"Camera": {
     "tilt": {maxTilt},
      "pan": {maxPan}
      }
    }
```

The recording command may include maximum values for tilt and pan for an arbitrary camera.

A description is provided below of embodiments in which an abnormal situation is sensed using multiple sensors for in-house security and safety management.

FIG. 15 is a diagram illustrating a schematic structure of a monitoring system including multiple sensors, according to an embodiment of the present disclosure.

Referring to FIG. 15, a monitoring system includes a plurality of cameras (camera #1 1502 through camera #N 1504) configured to record an object while tracking movement of the object, and various sensors (sensor #1 1512 through sensor #M 1514). The cameras 1502 and 1504 and the sensors 1512 and 1514 are configured to communicate with each other through a network 1500 based on a wired and/or wireless technique. In an embodiment of the present disclosure, the monitoring system may further include a server 1520 (or a gateway or a user terminal) capable of connecting to the cameras 1502 and 1504 and the sensors 1512 and 1514 through the network 1500. The server 1520 controls devices in the monitoring system to sense a situation in a monitoring area (e.g., a house) based on information collected by the multiple sensors 1512 and 1514 and the multiple cameras 1502 and 1504, and controls devices to perform predetermined operations corresponding to the sensed situation.

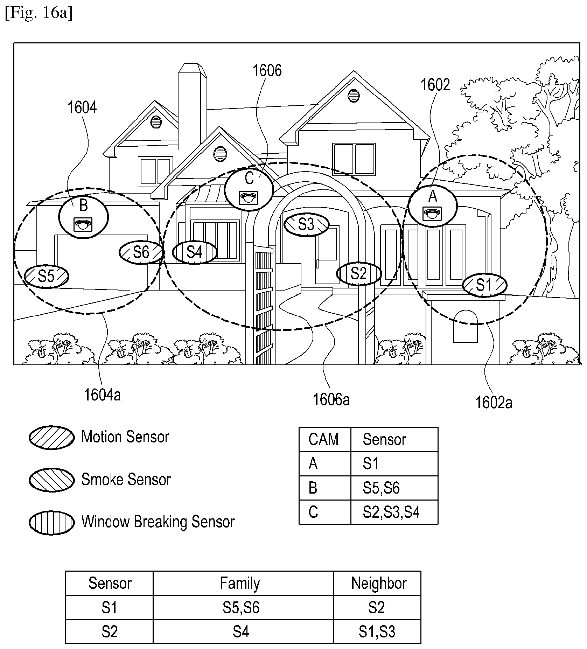

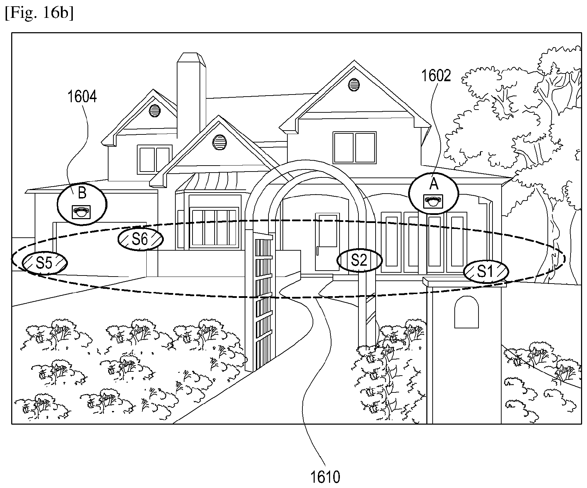

FIGS. 16a and 16b are diagrams illustrating multiple sensors and multiple cameras installed, according to an embodiment of the present disclosure.

Referring to FIG. 16a, camera A 1602, camera B 1604, and camera C 1606, and sensors S1, S2, S3, S4, S5, and S6 are installed in a house corresponding to a monitoring area. The sensors S1, S5, and S6 are motion sensors, the sensor S3 is a smoke sensor, and the sensors S2 and S4 are window-breaking sensors. The camera A 1602 interworks with the sensor S1 1602a, the camera B 1604 interworks with the sensors S5 and S6 1604a, and the camera C 1606 interworks with the sensors S2, S3, and S4 1606a. For the sensor S1, the same kind of sensors S5 and S6 are managed as a family, and the neighboring sensor S2 is managed as a neighbor. Likewise, for the sensor S2, the same kind of sensor S4 is managed as a family, and the neighboring sensors S1 and S3 are managed as neighbors.

FIG. 16b shows a cluster view 1610 of the sensor S1, including a family of the sensor S1 and neighboring sensors of the sensor S1.

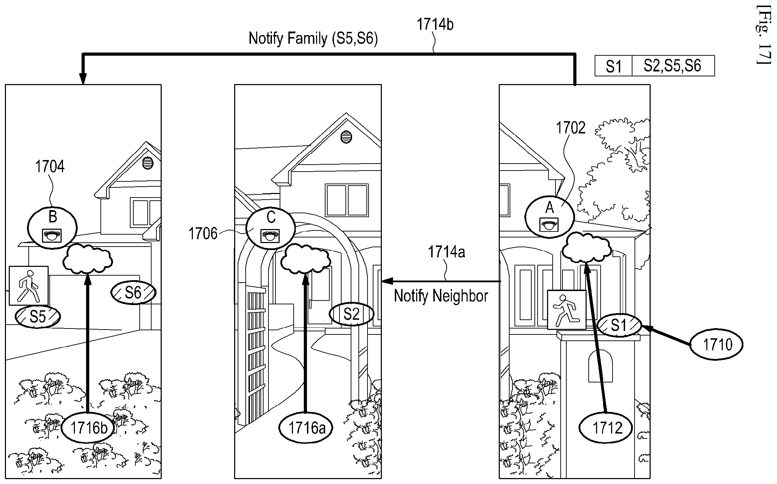

FIG. 17 is a diagram illustrating a tracking and monitoring scenario based on interworking with multiple sensors, according to an embodiment of the present disclosure.

Referring to FIG. 17, a sensor S1 detects an event corresponding to motion of an intruder, in step 1710, and reports the event to a camera A 1702 to cause the camera A 1702 to start recording, in step 1712. In steps 1714a and 1714b, the sensor S1 transmits the event to a sensor S2 managed as a neighbor, and to sensors S5 and S6 managed as a family. In step 1716a, the sensor S2 requests a camera C 1706 to perform recording such that recording is initiated before the intruder enters a visible range of the camera C 1706. Similarly, in step 1716b, the sensors S5 and S6 request a camera B 1704 to perform recording such that recording is initiated before the intruder enters a visible range of the camera B 1704.

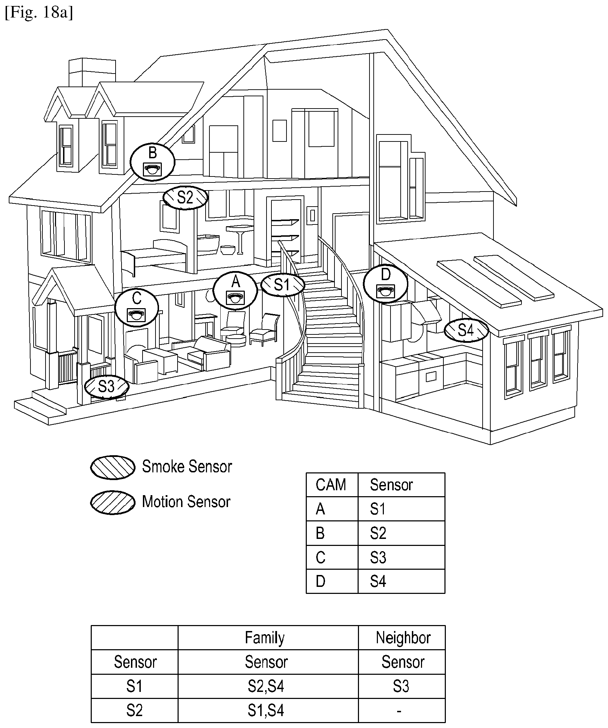

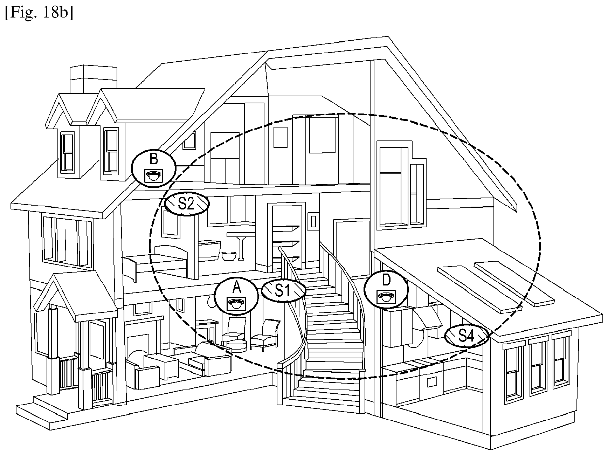

FIGS. 18a and 18b are diagrams illustrating multiple sensors and multiple cameras installed, according to another embodiment of the present disclosure.

Referring to FIG. 18a, a monitoring area is a house in which four cameras A, B, C, and D and four sensors S1, S2, S3, and S4 are installed to interwork with each other. The sensors S1, S2, and S4 are smoke sensors, and the sensor S3 is a motion sensor. For the sensor S1, the sensors S2 and S4 are managed as a family and the sensor S3 is managed as a neighbor. Similarly, for the sensor S2, the sensors S1 and S4 are managed as a family and the sensor S2 has no neighbor.

As shown in FIG. 18b, a cluster view of the sensor S2 includes the cameras A, B, and D, and the sensor S1.

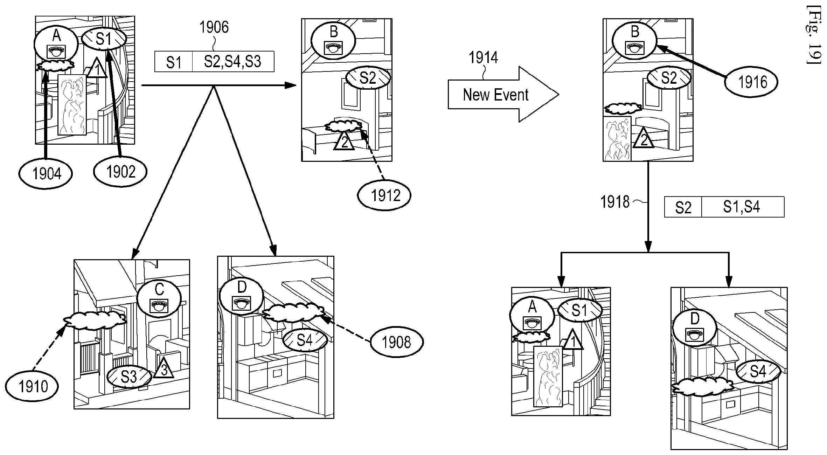

FIG. 19 is a diagram illustrating a tracking and monitoring scenario based on interworking with multiple sensors, according to an embodiment of the present disclosure.

Referring to FIG. 19, a sensor S1 senses occurrence of an abnormal situation, that is, generation of smoke, in step 1902, and requests a corresponding camera A to start a monitoring operation, in step 1904. Moreover, in step 1906, the sensor S1 requests sensors S2, S4, and S3, which are registered as members of a cluster of the sensor S1, to start the monitoring operation. Thus, in steps 1908, 1910, and 1912, the sensors S3, S4, and S2 request their corresponding cameras C, D, and B to start recording for the monitoring operation.

The sensor S2 senses generation of an new event of smoke, in operation 1914, and the corresponding camera B detects occurrence of the new event of smoke according to a report from the sensor S2, in operation 1916. The sensor S2 requests the sensors S1 and S4, which are registered in its cluster, to start the monitoring operation, in step 1918, such that the cameras A and D corresponding to the sensors S1 and S4 initiate recording.

As such, each sensor and each camera deliver occurrence of an event and initiation of a monitoring operation to related other devices, allowing an abnormal situation to be continuously monitored.

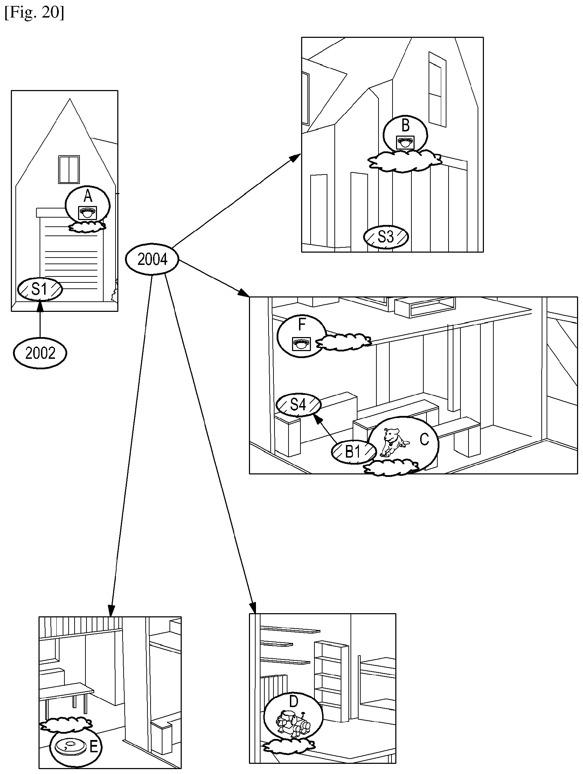

FIG. 20 is a diagram illustrating a tracking and monitoring scenario based on interworking with multiple sensors, according to an embodiment of the present disclosure.

Referring to FIG. 20, a sensor S1 senses an event regarding an abnormal situation like smoke, in step 2002, and notifies registered other devices of the event or instructs the devices to perform an operation corresponding to the event, in operation 2004. More specifically, cameras B, C, D, E, and F initiate recording and sensors S3 and S4 start a monitoring operation.

For example, the camera C may be a pet's collar cam mounted on a pet. The camera C is grouped with neighboring sensors located around a house, and the camera C initiates recording based on the event. As the pet moves, the camera C may record an accurate video from various angels. In another example, the camera D may be a camera mounted on a toy robot. The camera D may move to a position where a sensor having sensed the event is located, to perform recording toward the event. In another example, the camera E may be a camera mounted on a robotic cleaner. The camera E may perform recording while moving.

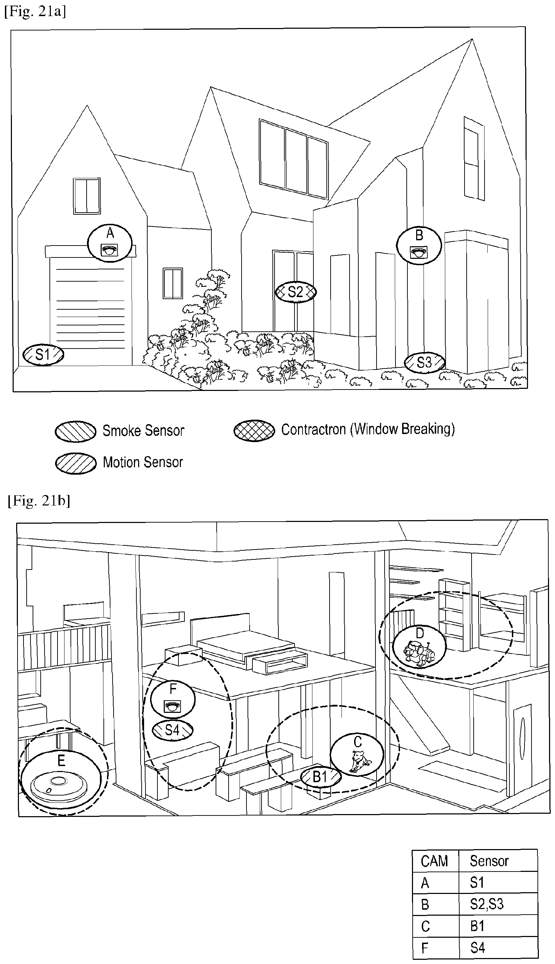

FIGS. 21a through 21e are diagrams illustrating a tracking and monitoring scenario based on interworking with multiple sensors, according to another embodiment of the present disclosure.

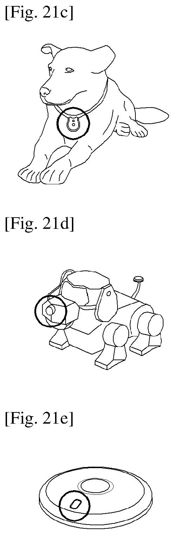

As shown in FIG. 21a, cameras A and B are installed on the outside of a house, which is a monitoring area. The camera A interworks with a motion sensor S1 and the camera B interworks with a breakage sensor S2 and a motion sensor S3. As shown in FIG. 21b, cameras C, D, E, and F are inside the house. The camera C interworks with a barking and movement sensor B1 mounted on the pet's collar, and the camera F interworks with a smoke sensor S4. As shown in FIGS. 21c, 21d, and 21e, the camera C is the pet's collar cam mounted on the pet, the camera D is mounted on the toy robot, and the camera E is mounted on the robotic cleaner.

For the sensor S1 located outside the house, the sensors S3 and B1, the camera D on the toy robot, and the camera E on the robotic cleaner are managed as a family, and the sensor S1 has no neighbor. For the sensor S2, the camera C on the pet, the camera D on the toy robot, and the camera E on the robotic cleaner are managed as a family, and the sensor S3 is managed as a neighbor. For the sensor B1, other pets may be managed as a family and a neighbor may be another sensor located near the sensor B1 along with movement of the pet.

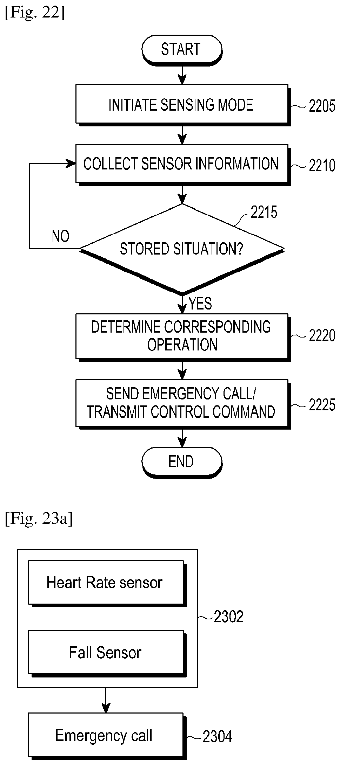

FIG. 22 is a flowchart illustrating a process of sensing a situation based on multiple sensors, according to an embodiment of the present disclosure. A server located in a monitoring system senses a situation based on a sensing result by multiple sensors. The following operations may be performed by a gateway, a sensor, or a camera, as well as a server.

Referring to FIG. 22, a monitoring operation is initiated, in step 2205. In another embodiment, each sensor may be maintained in a standby state and switch to a monitoring mode at the request of a server or another device to initiate the monitoring operation. In step 2210, the server collects a sensing result from multiple sensors in the monitoring system. For example, the sensors may periodically report the sensing result to the server. In another example, each sensor may report the sensing result to the server whenever sensing an event.

The server determines whether an abnormal situation occurs based on the sensing result from at least one of the sensors, in step 2215, and determines a corresponding operation, in step 2220, if the abnormal situation occurs. The abnormal situation and the corresponding operation may be determined, for example, based on Table 1.

[Table 1]

| S.No | Event | Pre-defined action | User defined additional actions |
|------|-------|--------------------|--------------------------------|
| 1 | Flood Detection | 1.Cut off water supply | 1. Send picture of the scene |
| | | 2.Cut off electricity of zone (to avoid short circuit) | |
| 2 | Gas Leakage | 1.Cut off gas supply | --- |
| | | 2.Electricity of zone (to avoid fire) | |
| 3 | Motion Detection | 1.Check Lock of the doors | 1.Start video of web cam |
| | | 2.If unlocked then lock them (towards the possible direction of the motion) | 2.Record video |
| 4 | Heart-Rate Sensor | 1.Notify family members | --- |
| | | 2.Notify nearest doctor / Emergency service | |
| 5 | Fall Sensor (Elderly) | 1.Notify family members | |
| 6 | Smoke Detection | 1.Cut off power supply | 1.Hibernate Computer, |
| | | 2.Block lift's requests | 2.Call Fire Service |
| 7 | Door Lock Tempering (wrong trials) | 1.Disable the door lock for some time | |
| | | 2.Notify User | |
| 8 | Water Leakage Sensor | 1.Cut off water supply | |
| 9 | Window Glass break | 1.Start cameras in the zone | 1.Notify neighbor |
| | | 2.Notify to user and security | |
| 10 | Dog's barking | 1.Send the video of Dog's collar camera | |
| 11 | Default action | 1. Notification to user. | 1.Send the picture |

For example, if a flood is sensed, the server automatically cuts off a water supply and cuts off an electricity supply to avoid a short-circuit. The server may further transmit a video of a situation to a user. If a gas leakage is sensed, the server automatically cuts off a gas supply and cuts off an electricity supply to avoid a fire. If motion is sensed, the server checks a lock of a door and locks the door if the door is unlocked. The server may further record a video through a web camera and saves the recorded video. If a heart rate sensor senses an abnormal event, the server notifies registered family members of the event and notifies the nearest doctor or emergency service of the event. If a fall sensor senses an abnormal event, the server notifies registered family members of the event. If smoke is sensed, the server cuts off a power supply and blocks the movement of an elevator. The server may further lock a computer and call a fire department. If a door lock is opened by wrong trials, the server disables the door lock from opening and notifies the user of the event. If a water leakage is sensed, the server automatically cuts off a water supply. If a window glass is broken, the server rotates cameras to a corresponding zone and notifies the user and a security company of the event. The server may further notify registered neighbors of the event. If the barking of a pet is sensed, the server collects video from the pet's collar camera. If other events are sensed, the server notifies the user of the events and transmits video to the user.

In step 2225, the server transmits a control command for controlling devices in the monitoring system, according to the determined operation or sends an emergency call to a registered user/service.

FIGS. 23a through 23d are diagrams illustrating a situation sensed using multiple, sensors according to an embodiment of the present disclosure.

Referring to FIG. 23a, if an event sensed by a heart rate sensor and a fall sensor is received, in step 2302, a server sends an emergency call to a registered receiver (e.g., family members, an emergency service, etc.), in step 2304.

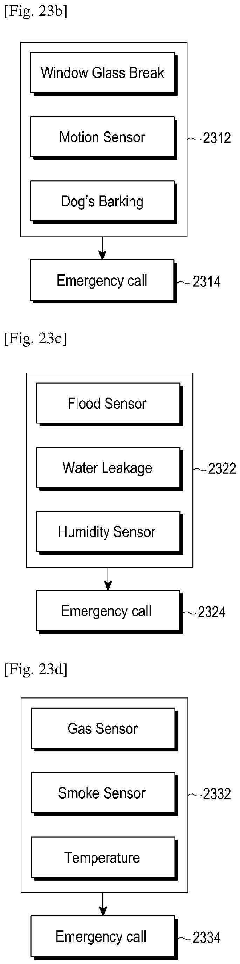

Referring to FIG. 23b, if breakage of a window glass is sensed, and an event is reported from a motion sensor and a barking sensor, in step 2312, the server sends an emergency call to a registered receiver (e.g., family members, a security company, etc.), in step 2314.

Referring to FIG. 23c, if water leakage is sensed, and an event is reported from a flood sensor and a humidity sensor, in step 2322, the server sends an emergency call to a registered receiver (e.g., family members, neighbors, an emergency service, and so forth), in step 2324.

Referring to FIG. 23d, if an event is reported from a gas sensor, a smoke sensor, and a temperature sensor, in operation 2332, the server sends an emergency call to a registered receiver (e.g., family members, neighbors, an emergency service, etc.), in step 2334.

Various embodiments of the present disclosure may be embodied as computer readable codes on a computer readable recording medium. The computer readable recording medium is any data storage device that can store data, which can be thereafter read by a computer system. Examples of the computer readable recording medium include ROM, RAM, Compact Disc (CD)-ROMs, magnetic tapes, floppy disks, optical data storage devices, carrier waves, and data transmission through the Internet. The computer readable recording medium can also be distributed over network coupled computer systems so that the computer readable code is stored and executed in a distributed fashion. Also, functional programs, codes, and code segments for accomplishing embodiments of the present disclosure can be easily construed by programmers skilled in the art to which the present disclosure pertains.

Various embodiments of the present disclosure can be implemented in hardware or a combination of hardware and software. The software can be recorded to a volatile or non-volatile storage device, such as a ROM irrespective of deletable or re-recordable, to a memory such as a RAM, a memory chip, a memory device, or an integrated circuit, or to a storage medium that is optically or magnetically recordable and readable by a machine (e.g. a computer), such as a CD, a Digital Versatile Disc (DVD), a magnetic disk, or a magnetic tape. The storage is an example of a machine-readable storage medium suitable for storing a program or programs including instructions to implement the embodiments of the present disclosure.

Accordingly, the present disclosure includes a program including a code for implementing the apparatus or the method as appended in the claims and a machine-readable storage medium that stores the program. The program may be transferred electronically through any medium such as a communication signal transmitted through a wired or wireless connection and the present disclosure covers equivalents thereof.

The apparatus, according to various embodiments of the present disclosure, may receive a program from a program providing apparatus, which is wire/wirelessly connected thereto, and thereafter store the program. The program providing apparatus may include a memory for storing a program including instructions allowing the apparatus to perform a preset content protection method, information required for a contents protection method, or the like, a communication unit for performing a wired/wireless communication with the apparatus, and a controller for transmitting a corresponding program to a transmitting and receiving apparatus either in response to a request from the apparatus or automatically.

While certain embodiments have been shown and described, it will be understood by those skilled in the art that various changes in form and detail may be made therein without departing from the scope of the disclosure as defined by the appended claims.

**Claims**

1. A camera (400, 802) in a security system, the camera comprising:

   a video recording unit (430) configured to record a video;
   a communication unit (440); and
   a controller (410) configured to:

      identify a subject from the video,
      predict a moving path of the subject,
      in response to identifying that the subject is predicted to move outside of a view range of the camera (400, 802), transmit a discovery signal, wherein the discovery signal comprises information for indicating that the type of target camera to be discovered is a WI-FI camera, receive response signals from a plurality of neighboring cameras (804,806) in response to the discovery signal, each response signal comprising type information and location information of a respective neighboring camera,
      identify at least one target camera corresponding to the moving path among the plurality of neighboring cameras based on the location information of the respective neighboring cameras included in the respective response signals,

identify that the at least one target camera supports Wi-Fi based on the type information of the at least one target camera,

control the communication unit (440) to directly connect to the at least one target camera, and

control the communication unit (440) to transmit a recording command comprising information about a motion pattern of the subject and location information necessary for continuously recording the moving path of the subject to the at least one target camera.

2. The camera of claim 1, wherein the controller (410) is further configured to command the video recording unit (430) to rotate toward at least one primary sensor and to initiate recording, upon receiving a sensing result of the at least one primary sensor through the communication unit (440), and to send a signal, to at least one secondary sensor through the communication unit (440), instructing the at least one secondary sensor to begin a sensing operation.

3. The camera of claim 1, wherein:
the communication unit (440) is further configured to broadcast the discovery signal comprising identification information about the camera (400, 802).

4. The camera of claim 1, wherein:
the communication unit (440) is further configured to broadcast the discovery signal comprising a zone to be searched, and identification information about the camera (400,802).

5. The camera of claim 1, wherein:
the communication unit (440) is further configured to send the discovery signal comprising identification information about the camera (400,802) through a directional signal to be directed along the moving path.

6. The camera of claim 1, wherein:
the communication unit (440) is further configured to broadcast the discovery signal comprising identification information about the camera (400,802), and the controller (410) is further configured to control the communication unit to send the recording command to the plurality of neighboring cameras if there is no target camera located near the moving path.

7. The camera of claim 3, wherein the location information comprises at least one of an absolute location, a relative location, and an installation location of a corresponding neighboring camera and the response signal comprises capability information regarding the corresponding neighboring camera.

8. The camera of claim 7, wherein the controller (410) is further configured to select a neighboring camera located near the moving path as the at least one target camera based on locations and capabilities of the plurality of neighboring cameras.

9. The camera of claim 1, wherein the controller (410) is further configured to receive a recording command comprising information about the subject from a neighboring camera through the communication unit, and to instruct the video recording unit (430) to record the video in response to the recording command.

10. The camera of claim 1, wherein the recording command comprises at least one of:

information related to at least one of an identification of the subject; and
an adjustment parameter for the target camera.

11. A method for operating a camera in a security system, the method comprising:

recording a video;
identifying a subject from the video;
predicting a moving path of the subject;
in response to identifying that the subject is predicted to move outside of a view range of the camera, transmitting, by a communication unit of the camera, a discovery signal, wherein the discovery signal comprises information for indicating that the type of the target camera to be discovered is a WI-FI camera;
receiving response signals from a plurality of neighboring cameras in response to the discovery signal, each response signal comprising type information and location information of a respective neighboring camera;
identifying at least one target camera corresponding to the moving path among the plurality of neighboring cameras based on the location information of the respective neighboring cameras included in the respective response signals;
identifying that the at least one target camera supports Wi-Fi based on the type information of the at least one target camera;
directly connecting, via the communication unit, to the at least one target camera; and
transmitting a recording command comprising information about a motion pattern of the subject and location information necessary for continuously recording the moving path of the subject to the at least one target camera.

**Patentansprüche**

1. Kamera (400, 802) in einem Sicherheitssystem, wobei die Kamera umfasst:

   eine Videoaufzeichnungseinheit (430), dazu konfiguriert, ein Video aufzuzeichnen;
   eine Kommunikationseinheit (440); und
   eine Steuereinrichtung (410), für Folgendes konfiguriert:

   Identifizieren eines Subjektes aus dem Video,
   Vorhersagen einer Bewegungsbahn des Subjektes,
   als Antwort auf das Erkennen, dass vorhergesagt wird, dass sich das Subjekt außerhalb eines Sichtbereiches der Kamera (400, 802) bewegt, Senden eines Entdeckungssignals, wobei das Entdeckungssignal Informationen zum Anzeigen, dass der Typ der zu entdeckenden Zielkamera eine Wi-Fi-Kamera ist, umfasst, Empfangen von Antwortsignalen aus einer Mehrzahl von benachbarten Kameras (804, 806) als Antwort auf das Entdeckungssignal, wobei jedes Antwortsignal Typinformationen und Positionsinformationen einer jeweiligen benachbarten Kamera umfasst,
   Identifizieren mindestens einer Zielkamera entsprechend der Bewegungsbahn unter der Mehrzahl von benachbarten Kameras auf der Grundlage der Positionsinformationen der jeweiligen benachbarten Kameras, die in den jeweiligen Antwortsignalen enthalten sind,
   Erkennen, dass die mindestens eine Zielkamera Wi-Fi unterstützt, auf der Grundlage der Typinformationen der mindestens einen Zielkamera,
   Steuern der Kommunikationseinheit (440), direkt eine Verbindung mit der mindestens einen Zielkamera herzustellen, und
   Steuern der Kommunikationseinheit (440), einen Aufzeichnungsbefehl, der Informationen über ein Bewegungsmuster des Subjektes und Positionsinformationen, die zum fortlaufenden Aufzeichnen der Bewegungsbahn des Subjektes erforderlich sind, umfasst, an die mindestens eine Zielkamera zu senden.

2. Kamera nach Anspruch 1, wobei die Steuereinrichtung (410) ferner dazu konfiguriert ist, der Videoaufzeichnungseinheit (430) den Befehl zu geben, sich in Richtung mindestens eines primären Sensors zu drehen und das Aufzeichnen einzuleiten, nachdem ein Abfühlergebnis des mindestens einen primären Sensors über die Kommunikationseinheit (440) empfangen wurde, und ein Signal an mindestens einen sekundären Sensor über die Kommunikationseinheit (440) zu senden, das den mindestens einen sekundären Sensor anweist, einen Abfühlvorgang zu beginnen.

3. Kamera nach Anspruch 1, wobei:
   die Kommunikationseinheit (440) ferner dazu konfiguriert ist, das Entdeckungssignal rundzusenden, das Kennungsinformationen über die Kamera (400, 802) umfasst.

4. Kamera nach Anspruch 1, wobei:
   die Kommunikationseinheit (440) ferner dazu konfiguriert ist, das Entdeckungssignal rundzusenden, das eine abzusuchende Zone und Kennungsinformationen über die Kamera (400, 802) umfasst.

5. Kamera nach Anspruch 1, wobei:
   die Kommunikationseinheit (440) ferner dazu konfiguriert ist, das Entdeckungssignal, das Kennungsinformationen über die Kamera (400, 802) umfasst, mittels eines entlang der Bewegungsbahn zu richtenden Richtsignals zu senden.

6. Kamera nach Anspruch 1, wobei:

die Kommunikationseinheit (440) ferner dazu konfiguriert ist, das Entdeckungssignal rundzusenden, das Kennungsinformationen über die Kamera (400, 802) umfasst, und
die Steuereinrichtung (410) ferner dazu konfiguriert ist, die Kommunikationseinheit zu steuern, den Aufzeichnungsbefehl an die Mehrzahl von benachbarten Kameras zu senden, falls sich keine Zielkamera in der Nähe der Bewegungsbahn befindet.

7. Kamera nach Anspruch 3, wobei die Positionsinformationen mindestens eine aus einer absoluten Position, einer relativen Position und einer Installationsposition einer entsprechenden benachbarten Kamera umfassen und das Antwortsignal Fähigkeitsinformationen bezüglich der entsprechenden benachbarten Kamera umfasst.

8. Kamera nach Anspruch 7, wobei die Steuereinrichtung (410) ferner dazu konfiguriert ist, eine in der Nähe der Bewegungsbahn befindliche benachbarte Kamera als die mindestens eine Zielkamera auf der Grundlage von Positionen und Fähigkeiten der Mehrzahl von benachbarten Kameras auszuwählen.

9. Kamera nach Anspruch 1, wobei die Steuereinrichtung (410) ferner dazu konfiguriert ist, einen Aufzeichnungsbefehl, der Informationen über das Subjekt umfasst, aus einer benachbarten Kamera über die Kommunikationseinheit zu empfangen und die Videoaufzeichnungseinheit (430) anzuweisen, das Video als Antwort auf den Aufzeichnungsbefehl aufzuzeichnen.

10. Kamera nach Anspruch 1, wobei der Aufzeichnungsbefehl mindestens eines aus den Folgenden umfasst:

   Informationen, die mit mindestens einer aus einer Kennung des Subjektes in Beziehung stehen; und
   einen Einstellparameter für die Zielkamera.

11. Verfahren zum Betrieb einer Kamera in einem Sicherheitssystem, wobei das Verfahren umfasst:

   Aufzeichnen eines Videos;
   Identifizieren eines Subjektes aus dem Video;
   Vorhersagen einer Bewegungsbahn des Subjektes;
   als Antwort auf das Erkennen, dass vorhergesagt wird, dass sich das Subjekt außerhalb eines Sichtbereiches der Kamera bewegt, Senden, durch eine Kommunikationseinheit der Kamera, eines Entdeckungssignals, wobei das Entdeckungssignal Informationen zum Anzeigen, dass der Typ der zu entdeckenden Zielkamera eine Wi-Fi-Kamera ist, umfasst;
   Empfangen von Antwortsignalen aus einer Mehrzahl von benachbarten Kameras als Antwort auf das Entdeckungssignal, wobei jedes Antwortsignal Typinformationen und Positionsinformationen einer jeweiligen benachbarten Kamera umfasst;
   Identifizieren mindestens einer Zielkamera entsprechend der Bewegungsbahn unter der Mehrzahl von benachbarten Kameras auf der Grundlage der Positionsinformationen der jeweiligen benachbarten Kameras, die in den jeweiligen Antwortsignalen enthalten sind;
   Erkennen, dass die mindestens eine Zielkamera Wi-Fi unterstützt, auf der Grundlage der Typinformationen der mindestens einen Zielkamera;
   direktes Herstellen, über die Kommunikationseinheit, einer Verbindung mit der mindestens einen Zielkamera; und
   Senden eines Aufzeichnungsbefehls, der Informationen über ein Bewegungsmuster des Subjektes und Positionsinformationen, die zum fortlaufenden Aufzeichnen der Bewegungsbahn des Subjektes erforderlich sind, umfasst, an die mindestens eine Zielkamera.

**Revendications**

1. Caméra (400, 802) dans un système de sécurité, la caméra comprenant :

   une unité d'enregistrement de vidéo (430) configurée pour enregistrer une vidéo ;
   une unité de communication (440) ; et
   un contrôleur (410) configuré pour :

      identifier un sujet à partir de la vidéo,
      prédire une trajectoire de déplacement du sujet,

en réponse à l'identification du fait qu'il est prédit que le sujet se déplace à l'extérieur d'une portée de vue de la caméra (400, 802),

transmettre un signal de découverte, le signal de découverte comprenant des informations pour indiquer que le type de caméra cible à découvrir est une caméra Wi-Fi,

recevoir des signaux de réponse à partir d'une pluralité de caméras voisines (804, 806) en réponse au signal de découverte, chaque signal de réponse comprenant des informations de type et des informations d'emplacement d'une caméra voisine respective,

identifier au moins une caméra cible correspondant à la trajectoire de déplacement parmi la pluralité de caméras voisines sur la base des informations d'emplacement des caméras voisines respectives incluses dans les signaux de réponse respectifs,

identifier que l'au moins une caméra cible prend en charge le Wi-Fi sur la base des informations de type de l'au moins une caméra cible,

contrôler l'unité de communication (440) pour se connecter directement à l'au moins une caméra cible, et contrôler l'unité de communication (440) pour transmettre une commande d'enregistrement comprenant des informations relatives à un schéma de déplacement du sujet et des informations d'emplacement nécessaires pour enregistrer en continu la trajectoire de déplacement du sujet jusqu'à l'au moins une caméra cible.

2. Caméra selon la revendication 1, dans laquelle le contrôleur (410) est en outre configuré pour commander l'unité d'enregistrement de vidéo (430) pour se tourner vers au moins un détecteur primaire et pour initier un enregistrement, lors de la réception d'un résultat de détection de l'au moins un détecteur primaire par le biais de l'unité de communication (440), et pour envoyer un signal, à au moins un détecteur secondaire par le biais de l'unité de communication (440), demandant à l'au moins un détecteur secondaire de commencer une opération de détection.

3. Caméra selon la revendication 1, dans laquelle :
l'unité de communication (440) est en outre configurée pour diffuser le signal de découverte comprenant des informations d'identification relatives à la caméra (400, 802).

4. Caméra selon la revendication 1, dans laquelle :
l'unité de communication (440) est en outre configurée pour diffuser le signal de découverte comprenant une zone dans laquelle chercher, et des informations d'identification relatives à la caméra (400, 802).

5. Caméra selon la revendication 1, dans laquelle :
l'unité de communication (440) est en outre configurée pour envoyer le signal de découverte comprenant des informations d'identification relatives à la caméra (400, 802) par le biais d'un signal directionnel à diriger le long de la trajectoire de déplacement.

6. Caméra selon la revendication 1, dans laquelle :

l'unité de communication (440) est en outre configurée pour diffuser le signal de découverte comprenant des informations d'identification relatives à la caméra (400, 802), et
le contrôleur (410) est en outre configuré pour contrôler l'unité de communication pour envoyer la commande d'enregistrement à la pluralité de caméras voisines s'il n'y a pas de caméra cible située à proximité de la trajectoire de déplacement.

7. Caméra selon la revendication 3, dans laquelle les informations d'emplacement comprennent au moins un emplacement parmi un emplacement absolu, un emplacement relatif et un emplacement d'installation d'une caméra voisine correspondante et le signal de réponse comprend des informations de capacité concernant la caméra voisine correspondante.

8. Caméra selon la revendication 7, dans laquelle le contrôleur (410) est en outre configuré pour sélectionner une caméra voisine située à proximité de la trajectoire de déplacement en tant que l'au moins une caméra cible sur la base d'emplacements et de capacités de la pluralité de caméras voisines.

9. Caméra selon la revendication 1, dans laquelle le contrôleur (410) est en outre configuré pour recevoir une commande d'enregistrement comprenant des informations relatives au sujet à partir d'une caméra voisine par le biais de l'unité de communication, et pour demander à l'unité d'enregistrement de vidéo (430) d'enregistrer la vidéo en réponse à la commande d'enregistrement.

**10.** Caméra selon la revendication 1, dans laquelle la commande d'enregistrement comprend au moins un élément parmi :

des informations relatives à au moins une identification du sujet ;
et un paramètre d'ajustement pour la caméra cible.

**11.** Procédé d'exploitation d'une caméra dans un système de sécurité, le procédé comprenant :

l'enregistrement d'une vidéo ;
l'identification d'un sujet à partir de la vidéo ;
la prédiction d'une trajectoire de déplacement du sujet ;
en réponse à l'identification du fait qu'il est prédit que le sujet se déplace à l'extérieur d'une portée de vue de la caméra, la transmission, par une unité de communication de la caméra, d'un signal de découverte, le signal de découverte comprenant des informations pour indiquer que le type de caméra cible à découvrir est une caméra Wi-Fi ;
la réception de signaux de réponse à partir d'une pluralité de caméras voisines en réponse au signal de découverte, chaque signal de réponse comprenant des informations de type et des informations d'emplacement d'une caméra voisine respective ;
l'identification d'au moins une caméra cible correspondant à la trajectoire de déplacement parmi la pluralité de caméras voisines sur la base des informations d'emplacement des caméras voisines respectives incluses dans les signaux de réponse respectifs ;
l'identification que l'au moins une caméra cible prend en charge le Wi-Fi sur la base des informations de type de l'au moins une caméra cible ;
la connexion directe, par le biais de l'unité de communication, à l'au moins une caméra cible ; et
la transmission d'une commande d'enregistrement comprenant des informations relatives à un schéma de déplacement du sujet et des informations d'emplacement nécessaires pour enregistrer en continu la trajectoire de déplacement du sujet jusqu'à l'au moins une caméra cible.

[Fig. 1]

[Fig. 2a]

[Fig. 2b]

[Fig. 3]

[Fig. 4]

[Fig. 5]

[Fig. 6a]

[Fig. 6b]

[Fig. 7]

[Fig. 8]

[Fig. 9a]

TRACK SUBJECT/ SENSE MOVING PATH —910   912

902   SEARCH NEIGHBOR CAMERAS (KITCHEN ZONE)   zone: kitchen

904   RESPONSE SIGNAL   914

zone: bed room   906

[Fig. 9b]

906a   906b
906
180° - 270° Living room   90° - 180° Kitchen

[Fig. 10a]

1010   1012
TRACK SUBJECT/ SENSE MOVING PATH   SEARCH NEIGHBOR CAMERAS (DIRECTIONAL SIGNAL)

1002

1004   RESPONSE   1006
1014

[Fig. 10b]

[Fig. 11]

```
                    ┌─────────┐
                    │  START  │
                    └────┬────┘
                         ▼
        ┌──────────────────────────────┐
        │   RECORDING STANDBY STATE     │── 1105
        └───────────────┬──────────────┘
                        ▼
        ┌──────────────────────────────┐
        │        SENSE SUBJECT          │── 1110
        └───────────────┬──────────────┘
                        ▼
        ┌──────────────────────────────┐
        │       START RECORDING         │── 1115
        └───────────────┬──────────────┘
                        ▼
        ┌──────────────────────────────┐
  ┌────▶│        TRACK SUBJECT          │── 1120
  │     └───────────────┬──────────────┘
  │                     ▼
  │     ┌──────────────────────────────┐
  │     │     CALCULATE MOVING PATH     │── 1125
  │     └───────────────┬──────────────┘
  │                     ▼           1130
  │                  ╱──────────────╲
  │      NO         ╱  SUBJECT MOVE   ╲
  └────────────────  OUTSIDE RECORDING  
                     ╲    RANGE?      ╱
                      ╲──────┬───────╱
                          YES│
                             ▼
        ┌──────────────────────────────┐
        │    SEARCH NEIGHBOR CAMERA     │── 1135
        └───────────────┬──────────────┘
                        ▼
        ┌──────────────────────────────┐
        │  COLLECT CAMERA INFORMATION   │── 1140
        └───────────────┬──────────────┘
                        ▼          1145
                   ╱──────────────╲          NO
                  ╱ NEIGHBOR CAMERA ╲─────────────────────┐
                  ╲    EXISTS?      ╱                      │
                   ╲──────┬────────╱                       │
                      YES │                                ▼
        ┌──────────────────────────┐   ┌──────────────────────────────┐
        │    SELECT TARGET CAMERA   │   │   SELECT ALL OF DISCOVERED    │
        │                           │── │          CAMERAS              │── 1165
        └───────────┬──────────────┘1150└───────────────┬──────────────┘
                    ▼                                    ▼
        ┌──────────────────────────┐   ┌──────────────────────────────┐
        │    SET UP TARGET CAMERA   │── │   REQUEST START OF RECORDING  │── 1170
        └───────────┬──────────────┘1155└───────────────┬──────────────┘
                    ▼                                    ▼
        ┌──────────────────────────┐   ┌──────────────────────────────┐
        │ REQUEST START OF RECORDING│── │   REQUEST SEARCH OF SUBJECT   │
        │                           │1160│    (CONTROL PAN AND TILT)     │── 1175
        └───────────┬──────────────┘   └───────────────┬──────────────┘
                    │                                    │
                    └───────────────┬────────────────────┘
                                    ▼
                               ┌─────────┐
                               │   END   │
                               └─────────┘
```

[Fig. 12]

```
                    ┌─────────┐
                    │  START  │
                    └────┬────┘
                         ▼
          ┌──────────────────────────┐
    ┌────▶│  RECORDING STANDBY STATE │──── 1205
    │     └────────────┬─────────────┘
    │                  ▼
    │     ┌──────────────────────────┐
    │     │  RECEIVE DISCOVERY SIGNAL │──── 1210
    │     └────────────┬─────────────┘
    │                  ▼         1215
    │            ◇──────────◇
    │  NO       CAMERA IS
    └──────────TARGET DEVICE?
               ◇──────────◇
                    │ YES
                    ▼
          ┌──────────────────────────┐
          │   SEND RESPONSE SIGNAL   │──── 1220
          └────────────┬─────────────┘
                       ▼
          ┌──────────────────────────┐
          │ RECEIVE RECORDING COMMAND │──── 1225
          └────────────┬─────────────┘
                       ▼
          ┌──────────────────────────┐
          │     START RECORDING      │──── 1230
          └────────────┬─────────────┘
                       ▼
          ┌──────────────────────────┐
          │     SEARCH SUBJECT       │──── 1235
          └────────────┬─────────────┘
                       ▼       1240
                 ◇──────────◇        NO
            SUBJECT IS DISCOVERED?───────────┐
                 ◇──────────◇                │
                    │ YES                    ▼
          ┌──────────────────┐   ┌──────────────────┐
          │ TRACK AND RECORD │   │    TERMINATE     │
          │     SUBJECT      │   │    RECORDING     │──── 1250
          └────────┬─────────┘   └────────┬─────────┘
              1245 │                       │
                   ▼◄──────────────────────┘
                ┌─────────┐
                │   END   │
                └─────────┘
```

[Fig. 13]

TRACK SUBJECT/
SENSE MOVING PATH ~1300

~1302

REQUEST ADJUSTMENT OF
CAMERA LOCATION &
START OF RECORDING ~1310

1304

1312

START RECORDING

TRACK SUBJECT

1306

1314

REQUEST ADJUSTMENT OF
CAMERA LOCATION &
START OF RECORDING

1316

1308

START
RECORDING

1318

[Fig. 14]

TRACK SUBJECT/
SENSE MOVING PATH — 1400

1418a

1410                1402

RECORDING
COMMAND — 1416

IGNORE

RECORDING
COMMAND

1412

1404

START RECORDING

START RECORDING &
TERMINATE RECORDING — 1412a

RECORDING
COMMAND

1410

1406

TRACK SUBJECT

1414

RECORDING
COMMAND

1416

1408

START
RECORDING

1418

[Fig. 15]

1502                1504

CAMERA #1    · · ·    CAMERA #N

1520

1500 — NETWORK

SERVER

SENSOR #1    · · ·    SENSOR #M

1512                1514

[Fig. 16a]

| CAM | Sensor |
|-----|--------|
| A | S1 |
| B | S5,S6 |
| C | S2,S3,S4 |

Motion Sensor

Smoke Sensor

Window Breaking Sensor

| Sensor | Family | Neighbor |
|--------|--------|----------|
| S1 | S5,S6 | S2 |
| S2 | S4 | S1,S3 |

[Fig. 16b]

[Fig. 17]

[Fig. 18a]

Smoke Sensor

Motion Sensor

| CAM | Sensor |
|-----|--------|
| A | S1 |
| B | S2 |
| C | S3 |
| D | S4 |

| | Family | Neighbor |
|---------|---------|----------|
| Sensor | Sensor | Sensor |
| S1 | S2,S4 | S3 |
| S2 | S1,S4 | - |

[Fig. 18b]

[Fig. 19]

[Fig. 20]

[Fig. 21a]

Smoke Sensor        Contractron (Window Breaking)

Motion Sensor

[Fig. 21b]

| CAM | Sensor |
| --- | --- |
| A | S1 |
| B | S2,S3 |
| C | B1 |
| F | S4 |

[Fig. 21c]

[Fig. 21d]

[Fig. 21e]

[Fig. 22]

```
                    ┌─────────┐
                    │  START  │
                    └────┬────┘
                         ▼
        ┌────────────────────────────────┐
        │     INITIATE SENSING MODE      │──2205
        └────────────────┬───────────────┘
                         ▼
        ┌────────────────────────────────┐
  ┌────▶│    COLLECT SENSOR INFORMATION  │──2210
  │     └────────────────┬───────────────┘
  │                      ▼        2215
  │            ◇─────────────────◇
  │NO         ◇                   ◇
  └──────────◇  STORED SITUATION? ◇
             ◇                   ◇
              ◇─────────┬───────◇
                        ▼YES
        ┌────────────────────────────────┐
        │   DETERMINE CORRESPONDING      │──2220
        │          OPERATION             │
        └────────────────┬───────────────┘
                         ▼
        ┌────────────────────────────────┐
        │     SEND EMERGENCY CALL/        │──2225
        │   TRANSMIT CONTROL COMMAND      │
        └────────────────┬───────────────┘
                         ▼
                    ┌─────────┐
                    │   END   │
                    └─────────┘
```

[Fig. 23a]

```
        ┌──────────────────────────────┐
        │  ┌────────────────────────┐  │
        │  │   Heart Rate sensor    │  │
        │  └────────────────────────┘  │
        │                              │──2302
        │  ┌────────────────────────┐  │
        │  │      Fall Sensor       │  │
        │  └────────────────────────┘  │
        └───────────────┬──────────────┘
                        ▼
        ┌──────────────────────────────┐
        │       Emergency call         │──2304
        └──────────────────────────────┘
```

[Fig. 23b]

```
┌─────────────────────────┐
│  ┌───────────────────┐  │
│  │ Window Glass Break │  │
│  └───────────────────┘  │
│                         │
│  ┌───────────────────┐  │
│  │   Motion Sensor   │  │ ~2312
│  └───────────────────┘  │
│                         │
│  ┌───────────────────┐  │
│  │   Dog's Barking   │  │
│  └───────────────────┘  │
└─────────────────────────┘
             │
             ▼
    ┌──────────────────┐
    │  Emergency call  │ ~2314
    └──────────────────┘
```

[Fig. 23c]

```
┌─────────────────────────┐
│  ┌───────────────────┐  │
│  │   Flood Sensor    │  │
│  └───────────────────┘  │
│                         │
│  ┌───────────────────┐  │
│  │   Water Leakage   │  │ ~2322
│  └───────────────────┘  │
│                         │
│  ┌───────────────────┐  │
│  │  Humidity Sensor  │  │
│  └───────────────────┘  │
└─────────────────────────┘
             │
             ▼
    ┌──────────────────┐
    │  Emergency call  │ ~2324
    └──────────────────┘
```

[Fig. 23d]

```
┌─────────────────────────┐
│  ┌───────────────────┐  │
│  │    Gas Sensor     │  │
│  └───────────────────┘  │
│                         │
│  ┌───────────────────┐  │
│  │   Smoke Sensor    │  │ ~2332
│  └───────────────────┘  │
│                         │
│  ┌───────────────────┐  │
│  │    Temperature    │  │
│  └───────────────────┘  │
└─────────────────────────┘
             │
             ▼
    ┌──────────────────┐
    │  Emergency call  │ ~2334
    └──────────────────┘
```

**EP 3 238 442 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008100359 A1
- EP 2549752 A1
- US 2006066723 A1